# EUROPEAN PATENT APPLICATION

(11) **EP 4 800 484 A1**
(43) Date of publication of application: **02.09.2026**
(21) Application number: 25190134.4
(22) Date of filing: 17.07.2025
(51) Int. Cl.: G03G 5/05, G03G 21/00

(54) **IMAGE FORMING APPARATUS AND PROCESS CARTRIDGE**

(30) Priority: 27.02.2025 JP 2025030616
(71) Applicant: FUJIFILM Business Innovation Corp., Minato-ku Tokyo (JP)
(72) Inventor: KOMURA, Misaki, Ebina-shi, Kanagawa (JP); TANO, Daisuke, Ebina-shi, Kanagawa (JP); YAMADA, Yoshiteru, Ebina-shi, Kanagawa (JP); KAWAMOTO, Yuka, Ebina-shi, Kanagawa (JP)
(74) Representative: Becker Kurig & Partner Patentanwälte mbB

(57) **Abstract**

An image forming apparatus includes an electrophotographic photoreceptor that has a photosensitive layer constituting a surface, a charging device that charges the surface of the electrophotographic photoreceptor, an electrostatic charge image forming device that forms an electrostatic charge image on the charged surface of the electrophotographic photoreceptor, a developing device that contains a developer and develops the electrostatic charge image formed on the surface of the electrophotographic photoreceptor by the developer as a toner image, a transfer device that transfers the toner image formed on the surface of the electrophotographic photoreceptor to a surface of a recording medium, and a cleaning device that has a cleaning blade coming into contact with the surface of the electrophotographic photoreceptor and cleaning at least residual toner particles on the surface of the electrophotographic photoreceptor, in which the photosensitive layer in the electrophotographic photoreceptor contains a polyester resin (1) that has a dicarboxylic acid unit (A) represented by Formula (A) and a diol unit (B) represented by Formula (B), and a contact portion of the cleaning blade with the electrophotographic photoreceptor has an impregnated cured layer of a composition that contains an isocyanate compound and at least one polymer selected from the group consisting of a fluorine-based polymer and a silicone-based polymer, 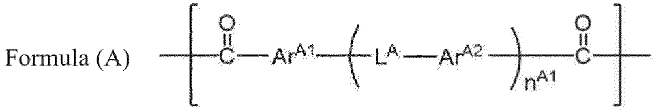 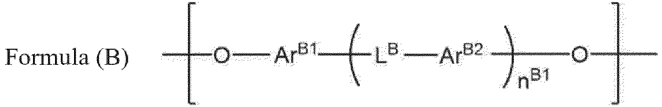 in Formula (A), Ar^{A1} and Ar^{A2} are each independently an aromatic ring that may have a substituent, L^{A} is a single bond or a divalent linking group, and n^{A1} is 0, 1, or 2,
in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

## Description

### BACKGROUND OF THE INVENTION

### (i) Field of the Invention

The present invention relates to an image forming apparatus and a process cartridge.

### (ii) Description of Related Art

In an image forming apparatus (such as a copy machine, a facsimile machine, and a printer) using an electrophotographic method, a toner image formed on a surface of an electrophotographic photoreceptor is transferred to the surface of a recording medium and fixed on the recording medium such that an image is formed.

Since the toner remains on the surface of the electrophotographic photoreceptor after the transfer of the toner image, a cleaning blade for cleaning the residual toner is disposed.

For example, JP2020-42160A discloses "cleaning member containing urethane rubber that has a cyclic structure portion in which a fluorine atom is directly linked".

JP2022-176575A discloses "image forming apparatus including a photoreceptor and a cleaning blade having an elastic member that abuts on a surface of the photoreceptor and removes an adhesion substance adhering to the surface of the photoreceptor, in which the photoreceptor includes a conductive support, and a photosensitive layer and a surface layer sequentially laminated on the conductive support, the surface layer contains a binder resin and particles, a Martens hardness of the surface layer is 150 N/mm² or more and less than 180 N/mm², an elastic work rate of the surface layer is 35% or more and less than 45%, the elastic member of the cleaning blade has a base material layer and the surface layer, the surface layer has a tip ridge part, and the surface layer has a domain having a polysiloxane structure with an average dispersion diameter of 0.1 µm or more and 5.0 µm or less in a region from a surface of the elastic member including the tip ridge part to a depth of 100 µm".

### SUMMARY OF THE INVENTION

In the related art, an image forming apparatus including an electrophotographic photoreceptor having a photosensitive layer that configures a surface, a charging device that charges the surface of the electrophotographic photoreceptor, an electrostatic charge image forming device that forms an electrostatic charge image on the charged surface of the electrophotographic photoreceptor, a developing device that contains a developer and develops the electrostatic charge image formed on the surface of the electrophotographic photoreceptor as a toner image by using the developer, a transfer device that transfers the toner image formed on the surface of the electrophotographic photoreceptor to a surface of a recording medium, and a cleaning device that has a cleaning blade coming into contact with the surface of the electrophotographic photoreceptor and cleaning at least residual toner particles on the surface of the electrophotographic photoreceptor is known (hereinafter, referred to as "specific image forming apparatus").

An object of the present invention is to provide the specific image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the photosensitive layer in the electrophotographic photoreceptor contains only a polycarbonate resin, or a case where a contact portion of the cleaning blade with the electrophotographic photoreceptor does not contain at least one polymer selected from the group consisting of a fluorine-based polymer and a silicone-based polymer.
<1> According to a first aspect of the present disclosure, there is provided an image forming apparatus including an electrophotographic photoreceptor that has a photosensitive layer constituting a surface, a charging device that charges the surface of the electrophotographic photoreceptor, an electrostatic charge image forming device that forms an electrostatic charge image on the charged surface of the electrophotographic photoreceptor, a developing device that contains a developer and develops the electrostatic charge image formed on the surface of the electrophotographic photoreceptor by the developer as a toner image, a transfer device that transfers the toner image formed on the surface of the electrophotographic photoreceptor to a surface of a recording medium, and a cleaning device that has a cleaning blade coming into contact with the surface of the electrophotographic photoreceptor and cleaning at least residual toner particles on the surface of the electrophotographic photoreceptor, in which the photosensitive layer in the electrophotographic photoreceptor contains a polyester resin (1) that has a dicarboxylic acid unit (A) represented by Formula (A) and a diol unit (B) represented by Formula (B), and a contact portion of the cleaning blade with the electrophotographic photoreceptor has an impregnated cured layer of a composition that contains an isocyanate compound and at least one polymer selected from the group consisting of a fluorine-based polymer and a silicone-based polymer, 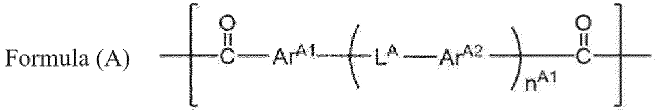 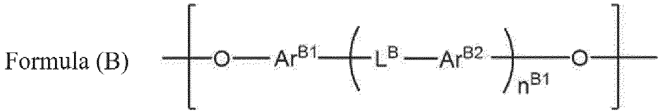
   in Formula (A), Ar^{A1} and Ar^{A2} are each independently an aromatic ring that may have a substituent, L^{A} is a single bond or a divalent linking group, and n^{A1} is 0, 1, or 2,
   in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.
<2> According to a second aspect of the present disclosure, there is provided the image forming apparatus according to <1>, in which a proportion of a total amount B of F and Si present within 200 nm from a surface of the contact portion of the cleaning blade with the electrophotographic photoreceptor to a total amount A of F and Si present within 5 µm from the surface of the contact portion of the cleaning blade with the electrophotographic photoreceptor may be 75% or more.
<3> According to a third aspect of the present disclosure, there is provided the image forming apparatus according to <2>, in which the proportion of the total amount B of F and Si to the total amount A of F and Si may be 85% or more and 95% or less.
<4> According to a fourth aspect of the present disclosure, there is provided the image forming apparatus according to <2> or <3>, in which a total amount C of F and Si present on the surface of the contact portion of the cleaning blade with the electrophotographic photoreceptor may be 15 atm% or more.
<5> According to a fifth aspect of the present disclosure, there is provided the image forming apparatus according to any one of <2> to <4>, in which a total amount D of F and Si present at a position of 50 nm from the surface of the contact portion of the cleaning blade with the electrophotographic photoreceptor may be 0.3 atm% or more.
<6> According to a sixth aspect of the present disclosure, there is provided the image forming apparatus according to any one of <1> to <5>, in which a 100% modulus of the surface of the contact portion of the cleaning blade with the electrophotographic photoreceptor at 23°C may be 5 MPa or more and 23 MPa or less.
<7> According to a seventh aspect of the present disclosure, there is provided the image forming apparatus according to any one of <1> to <6>, in which the photosensitive layer of the electrophotographic photoreceptor may contain, as the polyester resin (1), a polyester resin having a dicarboxylic acid unit represented by (A2) and a diol unit represented by (B 1), 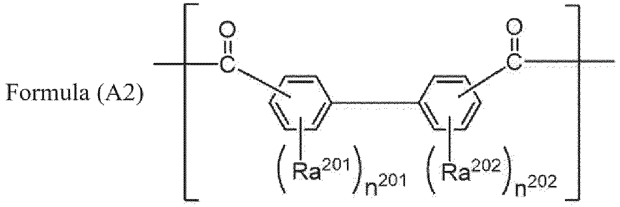 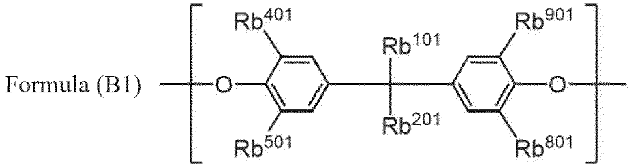
   in Formula (A2), n²⁰¹ and n²⁰² are each independently an integer of 0 or more and 4 or less, and n²⁰¹ pieces of Ra ²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms,
   in Formula (B 1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom,
<8> According to an eighth aspect of the present disclosure, there is provided the image forming apparatus according to <7>, in which the polyester resin having the dicarboxylic acid unit represented by Formula (A2) and the diol unit represented by Formula (B1) may be a polyester resin having a dicarboxylic acid unit represented by (A2-3) and a diol unit represented by (B1-4), 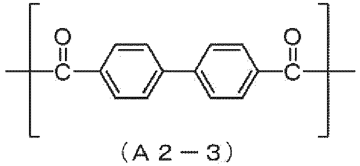 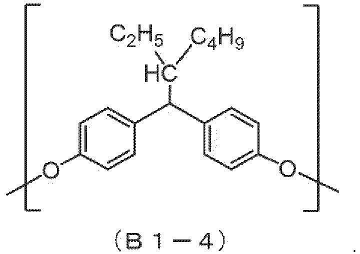
<9> According to a ninth aspect of the present disclosure, there is provided a process cartridge that is detachably mounted in an image forming apparatus, the process cartridge including an electrophotographic photoreceptor that has a photosensitive layer constituting a surface and a cleaning device that has a cleaning blade coming into contact with the surface of the electrophotographic photoreceptor and cleaning at least residual toner particles on the surface of the electrophotographic photoreceptor, in which the photosensitive layer in the electrophotographic photoreceptor contains a polyester resin (1) having a dicarboxylic acid unit (A) represented by Formula (A) and a diol unit (B) represented by Formula (B), and a contact portion of the cleaning blade with the electrophotographic photoreceptor contains an impregnated cured layer of a composition that contains an isocyanate and at least one polymer selected from the group consisting of a fluorine-based polymer and a silicone-based polymer, 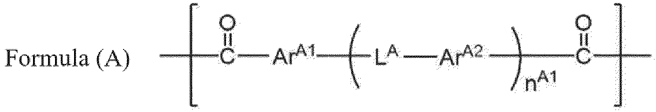 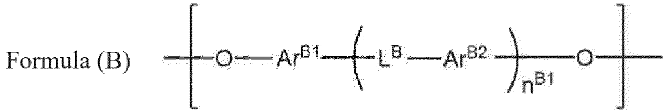
   In Formula (A), Ar^{A1} and Ar^{A2} are each independently an aromatic ring that may have a substituent, L^{A} is a single bond or a divalent linking group, and n^{A1} is 0, 1, or 2.
   in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

According to the disclosure of <1>, there is provided the specific image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the photosensitive layer in the electrophotographic photoreceptor contains only a polycarbonate resin, or a case where a contact portion of the cleaning blade with the electrophotographic photoreceptor does not contain at least one polymer selected from the group consisting of a fluorine-based polymer and a silicone-based polymer.

According to the disclosure of <2>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the proportion of the total amount B of F and Si present within 200 nm from the surface of the contact portion of the cleaning blade with the electrophotographic photoreceptor to the total amount A of F and Si present within 5 µm from the surface of the contact portion of the cleaning blade with the electrophotographic photoreceptor is less than 75%.

According to the disclosure of <3>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the proportion of the total amount B of F and Si to the total amount A of F and Si is less than 85% or more than 95%.

According to the disclosure of <4>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the total amount C of F and Si present on the surface of the contact portion of the cleaning blade with the electrophotographic photoreceptor is less than 15 atm%.

According to the disclosure of <5>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the total amount D of F and Si present at a position of 50 nm from the surface of the contact portion of the cleaning blade with the electrophotographic photoreceptor is less than 0.3 atm%.

According to the disclosure of <6>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the 100% modulus of the surface of the contact portion of the cleaning blade with the electrophotographic photoreceptor at 23°C is less than 5 MPa or more than 23 MPa.

According to the disclosure of <7>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the photosensitive layer of the electrophotographic photoreceptor contains, as the polyester resin (1), a polyester resin having the dicarboxylic acid unit represented by Formula (A1) and the diol unit represented by Formula (B5).

According to the disclosure of <8>, there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the polyester resin having the dicarboxylic acid unit represented by (A2) and the diol unit represented by (B1) is a polyester resin having a dicarboxylic acid unit represented by (A2-3) and a diol unit represented by (B1-2).

According to the disclosure of <9>, there is provided a process cartridge including an electrophotographic photoreceptor that has a photosensitive layer constituting a surface and a cleaning device that has a cleaning blade coming into contact with the surface of the electrophotographic photoreceptor and cleaning at least residual toner particles on the surface of the electrophotographic photoreceptor, the process cartridge having favorable cleaning performance and reducing wear of the electrophotographic photoreceptor even in both repeated image formation at a low image density under a high-temperature and high-humidity environment and repeated image formation at a high image density under a low-temperature and low-humidity environment, as compared with a case where the photosensitive layer in the electrophotographic photoreceptor contains only a polycarbonate resin, or a case where a contact portion of the cleaning blade with the electrophotographic photoreceptor does not contain at least one polymer selected from the group consisting of a fluorine-based polymer and a silicone-based polymer.

### BRIEF DESCRIPTION OF THE DRAWINGS

Exemplary embodiment(s) of the present invention will be described in detail based on the following figures, wherein:
FIG. 1 is a view schematically showing a configuration of an example of an image forming apparatus according to the present exemplary embodiment;
FIG. 2 is a partial cross-sectional view showing an example of a layer configuration of an electrophotographic photoreceptor; and
FIG. 3 is a partial cross-sectional view showing an example of a layer configuration of the electrophotographic photoreceptor.

### DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where there are two or more kinds of particles corresponding to each component in a composition, unless otherwise specified, the particle size of each component means a value for a mixture of two or more kinds of the particles present in the composition.

In the present disclosure, an alkyl group is any of linear, branched, or cyclic, unless otherwise specified.

In the present disclosure, a hydrogen atom in an organic group, an aromatic ring, a linking group, an alkyl group, an aryl group, an aralkyl group, an alkoxy group, or an aryloxy group may be substituted with a halogen atom.

In the present disclosure, an electrophotographic photoreceptor will also be referred to as "photoreceptor".

A cleaning blade will also be referred to as "blade".

A contact portion of the cleaning blade with the surface of the electrophotographic photoreceptor is also referred to as "blade tip portion".

The high-temperature and high-humidity environment refers to, for example, an environment with a temperature of 28°C and a relative humidity of 80%.

The low-temperature and low-humidity environment refers to, for example, an environment with a temperature of 10°C and a relative humidity of 15%.

The high image density refers to, for example, an image density of 10% or more and 25% or less.

The low image density refers to, for example, an image density of 0.1% or more and 1% or less.

The image density indicates an area ratio of an area occupied by an image to be formed to an area of a surface of a recording medium (that is, an image forming surface).

### [Image Forming Apparatus]

The image forming apparatus according to the present exemplary embodiment includes an electrophotographic photoreceptor having a photosensitive layer that configures a surface, a charging device that charges the surface of the electrophotographic photoreceptor, an electrostatic charge image forming device that forms an electrostatic charge image on the charged surface of the electrophotographic photoreceptor, a developing device that contains a developer and develops the electrostatic charge image formed on the surface of the electrophotographic photoreceptor as a toner image by using the developer, a transfer device that transfers the toner image formed on the surface of the electrophotographic photoreceptor to a surface of a recording medium, and a cleaning device that has a cleaning blade coming into contact with the surface of the electrophotographic photoreceptor and cleaning at least residual toner particles on the surface of the electrophotographic photoreceptor.

The photosensitive layer in the electrophotographic photoreceptor contains a polyester resin (1) having a dicarboxylic acid unit (A) represented by Formula (A) and a diol unit (B) represented by Formula (B).

In addition, a contact portion of the cleaning blade with the electrophotographic photoreceptor has an impregnated cured layer of a composition that contains an isocyanate compound and at least one polymer selected from the group consisting of a fluorine-based polymer and a silicone-based polymer.

The image forming apparatus according to the present exemplary embodiment is an image forming apparatus in which, due to the above-described configuration, cleaning performance is favorable and wear of the electrophotographic photoreceptor is reduced even in both repeated image formation at a low image density under a high-temperature and high-humidity environment and repeated image formation at a high image density under a low-temperature and low-humidity environment. The reason is presumed as follows.

In a case where an image having a low image density is repeatedly formed in a high-temperature and high-humidity environment, an amount of discharge generated product generated on the surface of the photoreceptor is considerably increased, and a supply amount of an external additive of a toner having a lubricating action with respect to a contact portion between the blade and the photoreceptor is insufficient. As a result, high friction between the blade and the photoreceptor is promoted.

In the high friction state, excessive retraction of a blade tip portion or local non-uniform retraction of the blade tip portion in the longitudinal direction occurs.

Therefore, curling of the blade, slipping of the toner, wear of the photoreceptor, and instability of the blade tip portion are deteriorated.

Application of lubricating particles to the surface of the photoreceptor or increase in the modulus of the blade is effective for increasing the friction between the blade and the photoreceptor.

However, as these measures are implemented, in a case where an image having a high image density is repeatedly formed in a low-temperature and low-humidity environment, the amount of discharge generated product generated on the surface of the photoreceptor is considerably decreased, and the supply amount of an external additive of a toner having a lubricating action with respect to a contact portion between the blade and the photoreceptor is excessive. As a result, low friction between the blade and the photoreceptor is excessively promoted.

In the excessive low friction state, the amount of retraction of the blade tip portion is insufficient, and local non-uniform retraction of the blade tip portion in the longitudinal direction occurs. Therefore, slipping of the toner is deteriorated.

As described above, even in both repeated image formation at a low image density under a high-temperature and high-humidity environment and repeated image formation at a high image density under a low-temperature and low-humidity environment, it is difficult to achieve favorable cleaning performance while simultaneously reducing wear of the electrophotographic photoreceptor.

On the other hand, in the image forming apparatus according to the present exemplary embodiment, the photosensitive layer of the photoreceptor contains the polyester resin (1) having the dicarboxylic acid unit (A) represented by Formula (A) and the diol unit (B) represented by Formula (B). As a result, even in a case where an image having a high image density is repeatedly formed in a low-temperature and low-humidity environment, extreme reduction in friction between the blade and the photoreceptor can be reduced, and an appropriate friction state can be achieved. This is because it is considered that filming (that is, fixing of a developer component) is suppressed and a contact portion (that is, a nip) between the blade that cleans the photoreceptor and the photoreceptor is stabilized. By reducing the extreme low friction, an appropriate retraction amount of the blade tip portion required for cleaning can be secured, and thus the cleaning performance can be improved. In addition, the photosensitive layer containing the polyester resin (1) has high durability and improved abrasion resistance.

In addition, in the image forming apparatus according to the present exemplary embodiment, the blade having, at the blade tip portion, an impregnated cured layer of a composition containing an isocyanate compound and at least one polymer selected from the group consisting of a fluorine-based polymer and a silicone-based polymer is adopted.

As a result, a high modulus of the blade tip portion and an appropriate reduction in friction between the blade and the photoreceptor are achieved. Therefore, even in a case where an image having a low image density is repeatedly formed in a high-temperature and high-humidity environment, the excessive retraction of the blade tip portion or the local non-uniform retraction of the blade tip portion in the longitudinal direction can be suppressed. Accordingly, the curling of the blade, the slipping of the toner, the wear of the photoreceptor, and the instability of the blade tip portion can be suppressed.

From the above, it is presumed that the image forming apparatus according to the present exemplary embodiment is an image forming apparatus in which the cleaning performance is favorable and the wear of the electrophotographic photoreceptor is reduced even in both repeated image formation at a low image density under a high-temperature and high-humidity environment and repeated image formation at a high image density under a low-temperature and low-humidity environment.

Here, as the image forming apparatus according to the present exemplary embodiment, a known image forming apparatus such as an apparatus including a direct transfer type apparatus that transfers the toner image formed on the surface of the photoreceptor directly to the recording medium, an intermediate transfer type apparatus that primarily transfers the toner image formed on the surface of the photoreceptor to the surface of the intermediate transfer member and secondarily transfers the toner image transferred to the surface of the intermediate transfer member to the surface of the recording medium, or an apparatus including a discharging device that irradiates the surface of the photoreceptor with discharging light after the transfer of the toner image and before the charging to discharge the surface is adopted.

In a case of the intermediate transfer-type apparatus, the transfer device has a configuration including an intermediate transfer member with surface on which the toner image will be transferred, a primary transfer device that performs primary transfer to transfer the toner image formed on the surface of the photoreceptor to the surface of the intermediate transfer member, and a secondary transfer device that performs secondary transfer to transfer the toner image transferred to the surface of the intermediate transfer member to the surface of a recording medium.

In the image forming apparatus according to the present exemplary embodiment, a portion including at least the photoreceptor and the cleaning device may constitute a unit for the image forming apparatus and may have a cartridge structure (process cartridge) that is attachable to and detachable from the image forming apparatus.

The process cartridge according to the present exemplary embodiment is not limited to the above-described configuration including the electrophotographic photoreceptor and the cleaning device, and the process cartridge may have, for example, a configuration including at least one selected from other units such as a charging device, an electrostatic charge image forming device, a developing device, and a transfer device, as necessary.

An example of the image forming apparatus according to the present exemplary embodiment will be shown below, but the present invention is not limited thereto. Hereinafter, among the parts shown in the drawing, main parts will be described, and others will not be described.

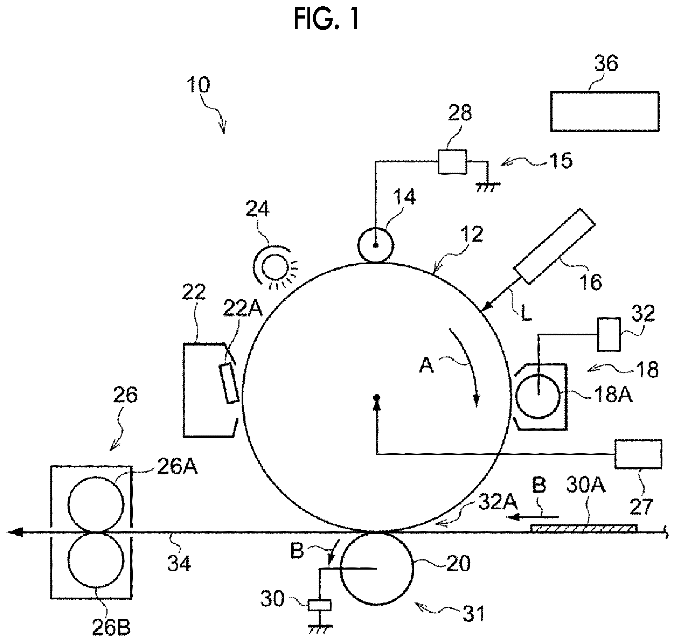

FIG. 1 is a view schematically showing a configuration of an example of the image forming apparatus according to the present exemplary embodiment.

An image forming apparatus 10 according to the present exemplary embodiment includes a photoreceptor 12 as shown in FIG. 1. The photoreceptor 12 has a columnar shape, is connected to a driving unit 27 such as a motor through a drive force transmission member (not shown) such as a gear, and is rotationally driven by the driving unit 27 around a rotation axis indicated by a black spot. In the example shown in FIG. 1, the photoreceptor 12 is rotationally driven in a direction indicated by an arrow A.

For example, a charging device 15, an electrostatic charge image forming device 16, a developing device 18, a transfer device 31, a cleaning device 22, and a discharging device 24 are provided in the vicinity of the photoreceptor 12 in order in a rotation direction of the photoreceptor 12. The image forming apparatus 10 is also provided with a fixing device 26 including a fixing member 26A and a pressure member 26B disposed in contact with the fixing member 26A. In addition, the image forming apparatus 10 includes a control device 36 that controls the operation of each device (each unit). The unit including the photoreceptor 12, the charging device 15, the electrostatic charge image forming device 16, the developing device 18, the transfer device 31, and the cleaning device 22 corresponds to an image forming unit.

In the image forming apparatus 10, at least the photoreceptor 12 and the cleaning device 22 may be provided as a process cartridge.

Hereinafter, each configuration of the image forming apparatus according to the present exemplary embodiment will be described.

### <Electrophotographic Photoreceptor>

The photoreceptor 12 has a photosensitive layer constituting a surface thereof. That is, the photosensitive layer is a layer disposed on the outermost surface of the electrophotographic photoreceptor, and constitutes the surface of the photoreceptor 12.

In addition, the photosensitive layer constituting the surface thereof contains a polyester resin (1) having a dicarboxylic acid unit (A) represented by Formula (A) and a diol unit (B) represented by Formula (B).

The photosensitive layer in the photoreceptor 12 may be a lamination-type photosensitive layer having a charge generation layer and a charge transport layer, or a single layer-type photosensitive layer.

That is, the photosensitive layer that constitutes the surface and contains the polyester resin (1) is a charge transport layer in the lamination-type photosensitive layer, or is the single layer-type photosensitive layer.

The photoreceptor 12 includes a conductive substrate in addition to the photosensitive layer (that is, the lamination-type photosensitive layer or the single layer-type photosensitive layer). In addition, the electrophotographic photoreceptor may further include other layers (for example, an undercoat layer and an interlayer) in addition to the conductive substrate and the photosensitive layer, as necessary.

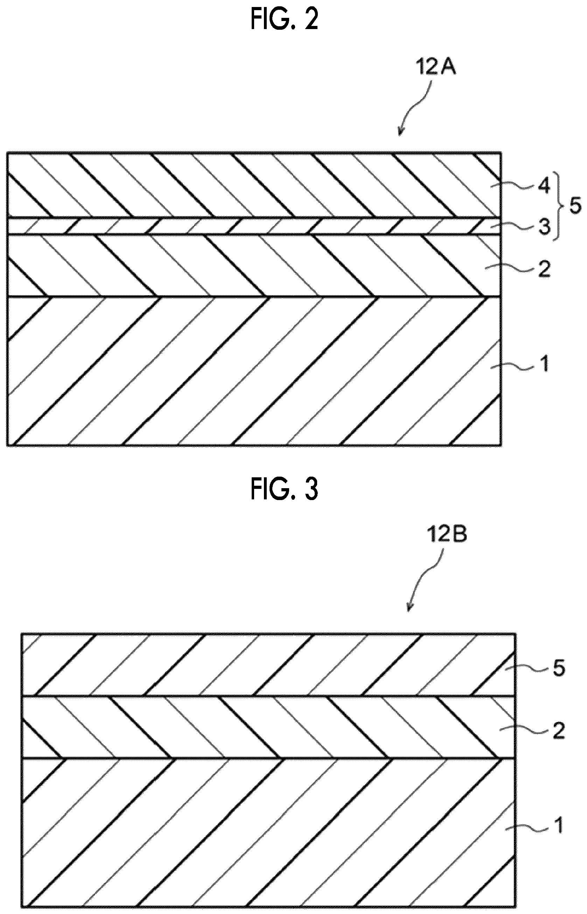

FIG. 2 is a partial cross-sectional view schematically showing an example of a layer configuration of the photoreceptor. A photoreceptor 12A shown in FIG. 2 includes a lamination-type photosensitive layer. The photoreceptor 12A has a structure in which an undercoat layer 2, a charge generation layer 3, and a charge transport layer 4 are laminated in this order on a conductive substrate 1, and the charge generation layer 3 and the charge transport layer 4 constitute a photosensitive layer 5 (so-called function separation-type photosensitive layer). The photoreceptor 12A may include an interlayer (not shown) between the undercoat layer 2 and the charge generation layer 3.

FIG. 3 is a partial cross-sectional view schematically showing an example of a layer configuration of the photoreceptor. A photoreceptor 12B shown in FIG. 3 includes a single layer-type photosensitive layer. The photoreceptor 12B has a structure in which the undercoat layer 2 and the single layer-type photosensitive layer 5 are laminated in this order on the conductive substrate 1. The photoreceptor 10B may include an interlayer (not shown) between the undercoat layer 2 and the single layer-type photosensitive layer 5.

### [Polyester Resin (1)]

The photosensitive layer constituting the surface contains the polyester resin (1) as a binder resin. Specifically, in a case where the photosensitive layer is the lamination-type photosensitive layer, the charge transport layer constituting the surface contains the polyester resin (1). In addition, in a case where the photosensitive layer is the single layer-type photosensitive layer, the single layer-type photosensitive layer contains the polyester resin (1).

The polyester resin (1) has at least the dicarboxylic acid unit (A) represented by Formula (A) and the diol unit (B) represented by Formula (B). The polyester resin (1) may have other dicarboxylic acid units in addition to the dicarboxylic acid unit (A). The polyester resin (1) may have other diol units in addition to the diol unit (B).

The dicarboxylic acid unit (A) is a constitutional unit represented by Formula (A).

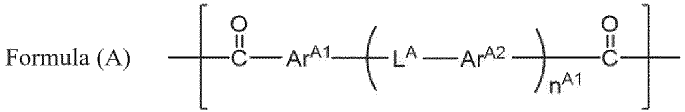

In Formula (A), Ar^{A1} and Ar^{A2} are each independently an aromatic ring that may have a substituent, L^{A} is a single bond or a divalent linking group, and n^{A1} is 0, 1, or 2.

The aromatic ring as Ar^{A1} may be a monocycle or a polycycle. Examples of the aromatic ring include a benzene ring, a naphthalene ring, an anthracene ring, and a phenanthrene ring; and for example, a benzene ring or a naphthalene ring is preferable.

A hydrogen atom on the aromatic ring as Ar^{A1} may be substituted with an alkyl group, an aryl group, an aralkyl group, an alkoxy group, an aryloxy group, a halogen atom, or the like. As the substituent in a case where the aromatic ring as Ar^{A1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{A2} may be a monocycle or a polycycle. Examples of the aromatic ring include a benzene ring, a naphthalene ring, an anthracene ring, and a phenanthrene ring; and for example, a benzene ring or a naphthalene ring is preferable.

A hydrogen atom on the aromatic ring as Ar^{A2} may be substituted with an alkyl group, an aryl group, an aralkyl group, an alkoxy group, an aryloxy group, a halogen atom, or the like. As the substituent in a case where the aromatic ring as Ar^{A2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

In a case where L^{A} is a divalent linking group, examples of the divalent linking group include an oxygen atom, a sulfur atom, and -C(Ra¹)(Ra²)-. Here, Ra¹ and Ra² are each independently a hydrogen atom, an alkyl group having 1 or more and 10 or less carbon atoms, an aryl group having 6 or more and 12 or less carbon atoms, or an aralkyl group having 7 or more and 20 or less carbon atoms, and Ra¹ and Ra² may be bonded to each other to form a cyclic alkyl group.

The alkyl group having 1 or more and 10 or less carbon atoms, as Ra¹ and Ra², may be linear, branched, or cyclic. The number of carbon atoms in the alkyl group is, for example, preferably 1 or more and 6 or less, more preferably 1 or more and 4 or less, and still more preferably 1 or 2.

The aryl group having 6 or more and 12 or less carbon atoms, as Ra¹ and Ra², may be a monocycle or a polycycle. The number of carbon atoms in the aryl group is, for example, preferably 6 or more and 10 or less, and more preferably 6.

An alkyl group of the aralkyl group having 7 or more and 20 or less carbon atoms, as Ra¹ and Ra², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Ra¹ and Ra², may be a monocycle or a polycycle. The number of carbon atoms in the aryl group is, for example, preferably 6 or more and 10 or less, and more preferably 6.

For example, it is preferable that the dicarboxylic acid unit (A) represented by Formula (A) includes at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), and a dicarboxylic acid unit (A4) represented by Formula (A4).

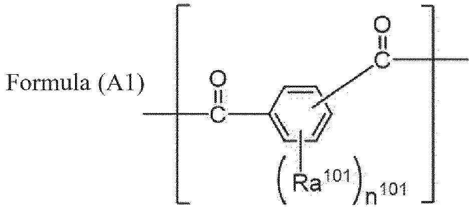

In Formula (A1), n¹⁰¹ is an integer of 0 or more and 4 or less, and n¹⁰¹ pieces of Ra¹⁰¹'s are each independently an alkyl group having 1 or more and 10 or less carbon atoms, an aryl group having 6 or more and 12 or less carbon atoms, or an alkoxy group having 1 or more and 6 or less carbon atoms.

n¹⁰¹ is, for example, preferably 0, 1, or 2, more preferably 0 or 1, and still more preferably 0.

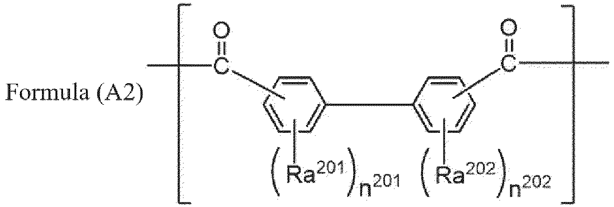

In Formula (A2), n²⁰¹ and n²⁰² are each independently an integer of 0 or more and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms.

n²⁰¹ is, for example, preferably 0, 1, or 2, more preferably 0 or 1, and still more preferably 0.

n²⁰² is, for example, preferably 0, 1, or 2, more preferably 0 or 1, and still more preferably 0.

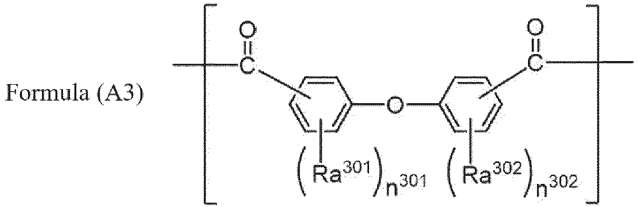

In Formula (A3), n³⁰¹ and n³⁰² are each independently an integer of 0 or more and 4 or less, and n³⁰¹ pieces of Ra³⁰¹'s and n³⁰² pieces of Ra³⁰¹'s are each independently an alkyl group having 1 or more and 10 or less carbon atoms, an aryl group having 6 or more and 12 or less carbon atoms, or an alkoxy group having 1 or more and 6 or less carbon atoms.

n³⁰¹ is, for example, preferably 0, 1, or 2, more preferably 0 or 1, and still more preferably 0.

n³⁰² is, for example, preferably 0, 1, or 2, more preferably 0 or 1, and still more preferably 0.

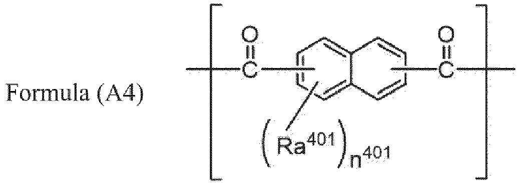

In Formula (A4), n⁴⁰¹ is an integer of 0 or more and 6 or less, and n⁴⁰¹ pieces of Ra⁴⁰¹'s are each independently an alkyl group having 1 or more and 10 or less carbon atoms, an aryl group having 6 or more and 12 or less carbon atoms, or an alkoxy group having 1 or more and 6 or less carbon atoms.

n⁴⁰¹ is, for example, preferably an integer of 0 or more and 4 or less, more preferably 0, 1, or 2, and still more preferably 0.

Specific aspects and preferred aspects of Ra¹⁰¹ in Formula (A1), Ra²⁰¹ and Ra²⁰² in Formula (A2), Ra³⁰¹ and Ra³⁰² in Formula (A3), and Ra⁴⁰¹ in Formula (A4) are the same as each other, so that Ra¹⁰¹, Ra²⁰¹, Ra²⁰², Ra³⁰¹, Ra³⁰², and Ra⁴⁰¹ will be collectively referred to as "Ra".

The alkyl group having 1 or more and 10 or less carbon atoms, as Ra, may be linear, branched, or cyclic. The number of carbon atoms in the alkyl group is, for example, preferably 1 or more and 6 or less, more preferably 1 or more and 4 or less, and still more preferably 1 or 2.

Examples of the linear alkyl group having 1 or more and 10 or less carbon atoms include a methyl group, an ethyl group, a n-propyl group, a n-butyl group, a n-pentyl group, a n-hexyl group, a n-heptyl group, a n-octyl group, a n-nonyl group, and a n-decyl group.

Examples of the branched alkyl group having 3 or more and 10 or less carbon atoms include an isopropyl group, an isobutyl group, a sec-butyl group, a tert-butyl group, an isopentyl group, a neopentyl group, a tert-pentyl group, an isohexyl group, a sec-hexyl group, a tert-hexyl group, an isoheptyl group, a sec-heptyl group, a tert-heptyl group, an isooctyl group, a sec-octyl group, a tert-octyl group, an isononyl group, a sec-nonyl group, a tert-nonyl group, an isodecyl group, a sec-decyl group, and a tert-decyl group.

Examples of the cyclic alkyl group having 3 or more and 10 or less carbon atoms include a cyclopropyl group, a cyclobutyl group, a cyclopentyl group, a cyclohexyl group, a cycloheptyl group, a cyclooctyl group, a cyclononyl group, a cyclodecyl group, and a polycyclic (for example, bicyclic, tricyclic, or spirocyclic) alkyl group composed of these monocyclic alkyl groups linked to each other.

The aryl group having 6 or more and 12 or less carbon atoms, as Ra, may be a monocycle or a polycycle. The number of carbon atoms in the aryl group is, for example, preferably 6 or more and 10 or less, and more preferably 6.

Examples of the aryl group having 6 or more and 12 or less carbon atoms include a phenyl group, a biphenyl group, a 1-naphthyl group, and a 2-naphthyl group.

An alkyl group of the alkoxy group having 1 or more and 6 or less carbon atoms, as Ra, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, a n-propoxy group, a n-butoxy group, a n-pentyloxy group, and a n-hexyloxy group.

Examples of the branched alkoxy group having 3 or more and 6 or less carbon atoms include an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Dicarboxylic acid units (A1-1) to (A1-9) are shown below as specific examples of the dicarboxylic acid unit (A1). The dicarboxylic acid unit (A1) is not limited thereto.

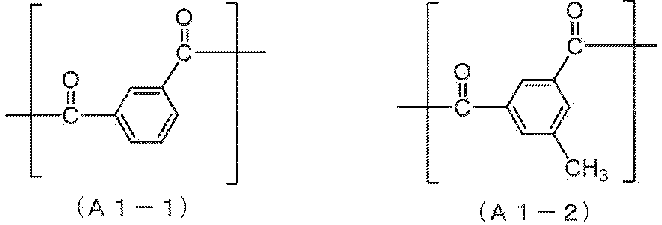

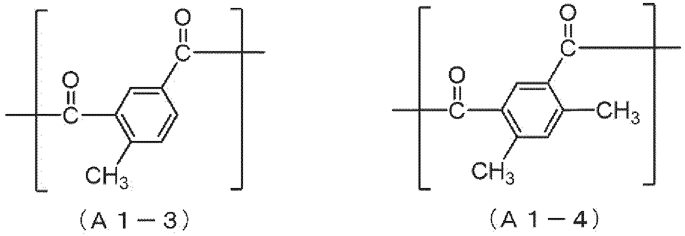

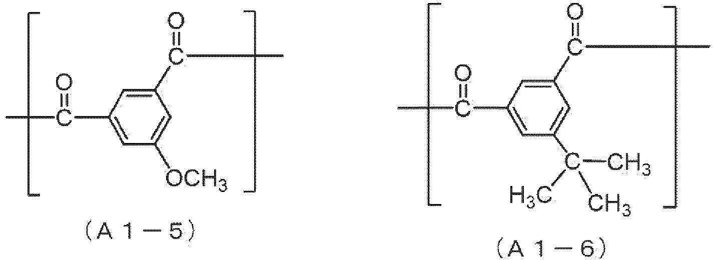

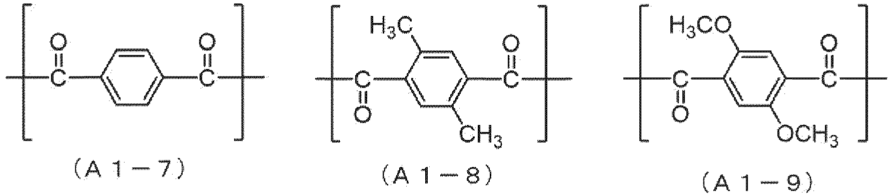

Dicarboxylic acid units (A2-1) to (A2-3) are shown below as specific examples of the dicarboxylic acid unit (A2). The dicarboxylic acid unit (A2) is not limited thereto.

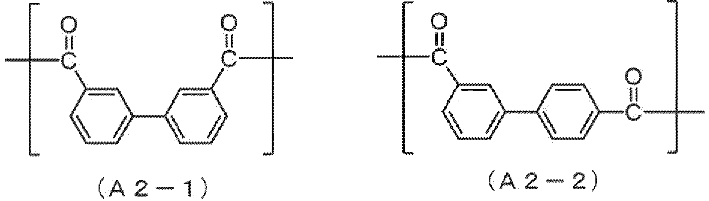

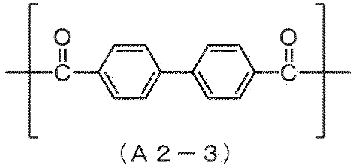

Dicarboxylic acid units (A3-1) and (A3-2) are shown below as specific examples of the dicarboxylic acid unit (A3). The dicarboxylic acid unit (A3) is not limited thereto.

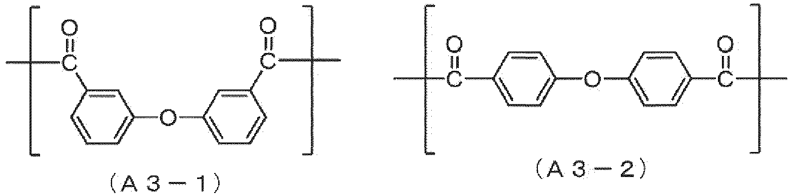

Dicarboxylic acid units (A4-1) to (A4-3) are shown below as specific examples of the dicarboxylic acid unit (A4). The dicarboxylic acid unit (A4) is not limited thereto. 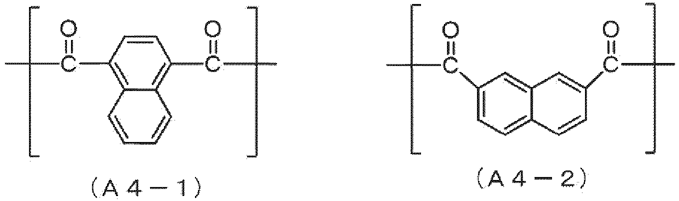 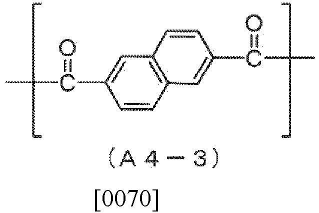 As the dicarboxylic acid unit (A), for example, (A1-1), (A1-7), (A2-3), (A3-2), or (A4-3) in the above-described specific examples is preferable, and (A2-3) is most preferable.

The total mass proportion of the dicarboxylic acid units (A1) to (A4) in the polyester resin (1) is, for example, preferably 15% by mass or more and 60% by mass or less.

In a case where the total mass proportion of the dicarboxylic acid units (A1) to (A4) is 15% by mass or more, the abrasion resistance of the photosensitive layer is enhanced. From the viewpoint, the total mass proportion of the dicarboxylic acid units (A1) to (A4) is, for example, more preferably 20% by mass or more, and still more preferably 25% by mass or more.

In a case where the total mass proportion of the dicarboxylic acid units (A1) to (A4) is 60% by mass or less, peeling of the photosensitive layer can be suppressed. From the viewpoint, the total mass proportion of the dicarboxylic acid units (A1) to (A4) is, for example, more preferably 55% by mass or less, and still more preferably 50% by mass or less.

The dicarboxylic acid units (A1) to (A4) in the polyester resin (1) may be used alone or in combination of two or more kinds thereof.

Examples of the other dicarboxylic acid units (A) in addition to the dicarboxylic acid units (A1) to (A4) include aliphatic dicarboxylic acid (such as oxalic acid, malonic acid, maleic acid, fumaric acid, citraconic acid, itaconic acid, glutaconic acid, succinic acid, alkenyl succinic acid, adipic acid, and sebacic acid) units, alicyclic dicarboxylic acid (such as cyclohexanedicarboxylic acid) units, lower (for example, having 1 or more and 5 or less carbon atoms) alkyl ester units thereof, and aromatic dicarboxylic acid units represented by Formulae (A5) to (A8) described later. The dicarboxylic acid units in the polyester resin (1) may be used alone or in combination of two or more kinds thereof.

The dicarboxylic acid unit (A) in the polyester resin (1) may be used alone or in combination of two or more kinds thereof.

The diol unit (B) is a constitutional unit represented by Formula (B).

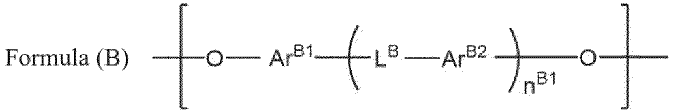

In Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

The aromatic ring as Ar^{B1} may be a monocycle or a polycycle. Examples of the aromatic ring include a benzene ring, a naphthalene ring, an anthracene ring, and a phenanthrene ring; and for example, a benzene ring or a naphthalene ring is preferable.

A hydrogen atom on the aromatic ring as Ar^{B1} may be substituted with an alkyl group, an aryl group, an aralkyl group, an alkoxy group, an aryloxy group, a halogen atom, or the like. As the substituent in a case where the aromatic ring as Ar^{B1} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as Ar^{B2} may be a monocycle or a polycycle. Examples of the aromatic ring include a benzene ring, a naphthalene ring, an anthracene ring, and a phenanthrene ring; and for example, a benzene ring or a naphthalene ring is preferable.

A hydrogen atom on the aromatic ring as Ar^{B2} may be substituted with an alkyl group, an aryl group, an aralkyl group, an alkoxy group, an aryloxy group, a halogen atom, or the like. As the substituent in a case where the aromatic ring as Ar^{B2} is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The alkyl group having 1 or more and 20 or less carbon atoms, as Rb¹ and Rb², may be linear, branched, or cyclic. The number of carbon atoms in the alkyl group is, for example, preferably 1 or more and 18 or less, more preferably 1 or more and 14 or less, and still more preferably 1 or more and 10 or less.

The aryl group having 6 or more and 12 or less carbon atoms, as Rb¹ and Rb², may be a monocycle or a polycycle. The number of carbon atoms in the aryl group is, for example, preferably 6 or more and 10 or less, and more preferably 6.

An alkyl group of the aralkyl group having 7 or more and 20 or less carbon atoms, as Rb¹ and Rb², may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as Rb¹ and Rb², may be a monocycle or a polycycle. The number of carbon atoms in the aryl group is, for example, preferably 6 or more and 10 or less, and more preferably 6.

For example, it is preferable that the diol unit (B) represented by Formula (B) includes at least one selected from the group consisting of a diol unit (B 1) represented by Formula (B 1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).

For example, the diol unit (B) more preferably includes at least one selected from the group consisting of the diol unit (B1) represented by Formula (B1), the diol unit (B2) represented by Formula (B2), the diol unit (B4) represented by Formula (B4), the diol unit (B5) represented by Formula (B5), and the diol unit (B6) represented by Formula (B6);
still more preferably includes at least one selected from the group consisting of the diol unit (B 1) represented by Formula (B1), the diol unit (B2) represented by Formula (B2), the diol unit (B5) represented by Formula (B5), and the diol unit (B6) represented by Formula (B6);
even more preferably at least one selected from the group consisting of the diol unit (B1) represented by Formula (B1), the diol unit (B2) represented by Formula (B2), and the diol unit (B6) represented by Formula (B6); and
most preferably at least one selected from the group consisting of the diol unit (B 1) represented by Formula (B1) and the diol unit (B2) represented by Formula (B2).

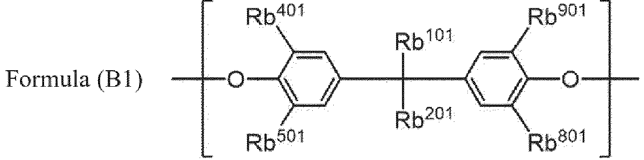

In Formula (B1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom.

The number of carbon atoms in the branched alkyl group having 4 or more and 20 or less carbon atoms, as Rb¹⁰¹, is, for example, preferably 4 or more and 16 or less, more preferably 4 or more and 12 or less, and still more preferably 4 or more and 8 or less. Specific examples of Rb¹⁰¹ include an isobutyl group, a sec-butyl group, a tert-butyl group, an isopentyl group, a neopentyl group, a tert-pentyl group, an isohexyl group, a sec-hexyl group, a tert-hexyl group, an isoheptyl group, a sec-heptyl group, a tert-heptyl group, an isooctyl group, a sec-octyl group, a tert-octyl group, an isononyl group, a sec-nonyl group, a tert-nonyl group, an isodecyl group, a sec-decyl group, a tert-decyl group, an isododecyl group, a sec-dodecyl group, a tert-dodecyl group, a tert-tetradecyl group, and a tert-pentadecyl group.

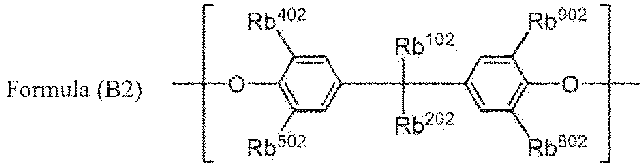

In Formula (B2), Rb¹⁰² is a linear alkyl group having 4 or more and 20 or less carbon atoms, Rb²⁰² is a hydrogen atom or an alkyl group having 1 or more and 3 or less carbon atoms, and Rb⁴⁰², Rb⁵⁰², Rb⁸⁰², and Rb⁹⁰² are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 4 or more and 20 or less carbon atoms, as Rb¹⁰², is, for example, preferably 4 or more and 16 or less, more preferably 4 or more and 12 or less, and still more preferably 4 or more and 8 or less. Specific examples of Rb¹⁰² include a n-butyl group, a n-pentyl group, a n-hexyl group, a n-heptyl group, a n-octyl group, a n-nonyl group, a n-decyl group, a n-undecyl group, a n-dodecyl group, a tridecyl group, a n-tetradecyl group, a n-pentadecyl group, a n-heptadecyl group, a n-octadecyl group, a n-nonadecyl group, and a n-icosyl group.

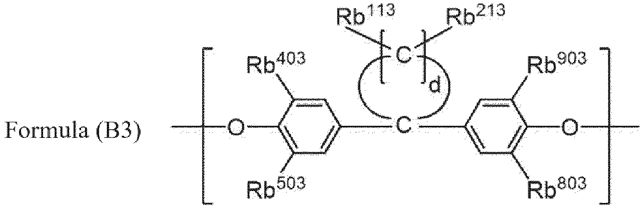

In Formula (B3), Rb¹¹³ and Rb²¹³ are each independently a hydrogen atom, a linear alkyl group having 1 or more and 3 or less carbon atoms, an alkoxy group having 1 or more and 4 or less carbon atoms, or a halogen atom, d is an integer of 7 or more and 15 or less, and Rb⁴⁰³, Rb⁵⁰³, Rb⁸⁰³, and Rb⁹⁰³ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹³ and Rb²¹³, is, for example, preferably 1 or 2 and more preferably 1. Specific examples of such a group include a methyl group, an ethyl group, and a n-propyl group.

An alkyl group of the alkoxy group having 1 or more and 4 or less carbon atoms, as Rb¹¹³ and Rb²¹³, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, a n-propoxy group, a n-butoxy group, an isopropoxy group, an isobutoxy group, a sec-butoxy group, a tert-butoxy group, a cyclopropoxy group, and a cyclobutoxy group.

Examples of the halogen atom as Rb¹¹³ and Rb²¹³ include a fluorine atom, a chlorine atom, a bromine atom, and an iodine atom.

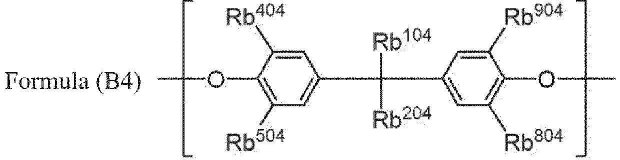

In Formula (B4), Rb¹⁰⁴ and Rb²⁰⁴ are each independently a hydrogen atom or an alkyl group having 1 or more and 3 or less carbon atoms, and Rb⁴⁰⁴, Rb⁵⁰⁴, Rb⁸⁰⁴, and Rb⁹⁰⁴ are each independently a hydrogen atom, an alkyl group having 1 or more and 4 or less carbon atoms, an alkoxy group having 1 or more and 6 or less carbon atoms, or a halogen atom.

The alkyl group having 1 or more and 3 or less carbon atoms, as Rb¹⁰⁴, may be linear, branched, or cyclic. The number of carbon atoms in the alkyl group is, for example, preferably 1 or 2 and more preferably 1. Specific examples of Rb¹⁰⁴ include a methyl group, an ethyl group, a n-propyl group, an isopropyl group, and a cyclopropyl group.

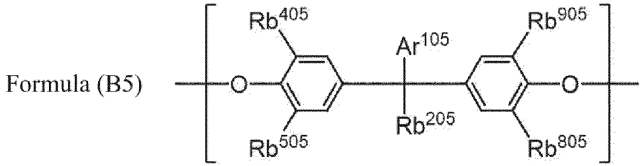

In Formula (B5), Ar¹⁰⁵ is an aryl group having 6 or more and 12 or less carbon atoms or an aralkyl group having 7 or more and 20 or less carbon atoms, Rb²⁰⁵ is a hydrogen atom or an alkyl group having 1 or more and 3 or less carbon atoms, and Rb⁴⁰⁵, Rb⁵⁰⁵, Rb⁸⁰⁵, and Rb⁹⁰⁵ are each independently a hydrogen atom, an alkyl group having 1 or more and 4 or less carbon atoms, an alkoxy group having 1 or more and 6 or less carbon atoms, or a halogen atom.

The aryl group having 6 or more and 12 or less carbon atoms, as Ar¹⁰⁵, may be a monocycle or a polycycle. The number of carbon atoms in the aryl group is, for example, preferably 6 or more and 10 or less, and more preferably 6.

An alkyl group of the aralkyl group having 7 or more and 20 or less carbon atoms, as Ar¹⁰⁵, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2. An aryl group of the aralkyl group having 7 or more and 20 or less carbon atoms, as Ar¹⁰⁵, may be a monocycle or a polycycle. The number of carbon atoms in the aryl group is, for example, preferably 6 or more and 10 or less, and more preferably 6. Examples of the aralkyl group having 7 or more and 20 or less carbon atoms include a benzyl group, a phenylethyl group, a phenylpropyl group, a 4-phenylbutyl group, a phenylpentyl group, a phenylhexyl group, a phenylheptyl group, a phenyloctyl group, a phenylnonyl group, a naphthylmethyl group, a naphthylethyl group, an anthracenylmethyl group, and a phenyl-cyclopentylmethyl group.

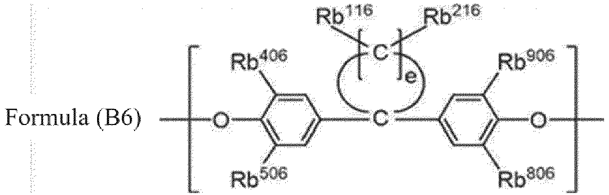

In Formula (B6), Rb¹¹⁶ and Rb²¹⁶ are each independently a hydrogen atom, a linear alkyl group having 1 or more and 3 or less carbon atoms, an alkoxy group having 1 or more and 4 or less carbon atoms, or a halogen atom, e is an integer of 4 or more and 6 or less, and Rb⁴⁰⁶, Rb⁵⁰⁶, Rb⁸⁰⁶, and Rb⁹⁰⁶ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as Rb¹¹⁶ and Rb²¹⁶, is, for example, preferably 1 or 2 and more preferably 1. Specific examples of such a group include a methyl group, an ethyl group, and a n-propyl group.

An alkyl group of the alkoxy group having 1 or more and 4 or less carbon atoms, as Rb¹¹⁶ and Rb²¹⁶, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, a n-propoxy group, a n-butoxy group, an isopropoxy group, an isobutoxy group, a sec-butoxy group, a tert-butoxy group, a cyclopropoxy group, and a cyclobutoxy group.

Examples of the halogen atom as Rb¹¹⁶ and Rb²¹⁶ include a fluorine atom, a chlorine atom, a bromine atom, and an iodine atom.

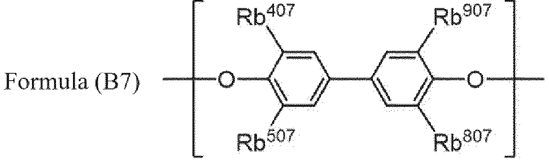

In Formula (B7), Rb⁴⁰⁷, Rb⁵⁰⁷, Rb⁸⁰⁷, and Rb⁹⁰⁷ are each independently a hydrogen atom, an alkyl group having 1 or more and 4 or less carbon atoms, an alkoxy group having 1 or more and 6 or less carbon atoms, or a halogen atom.

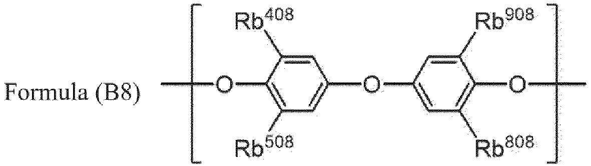

In Formula (B8), Rb⁴⁰⁸, Rb⁵⁰⁸, Rb⁸⁰⁸, and Rb⁹⁰⁸ are each independently a hydrogen atom, an alkyl group having 1 or more and 4 or less carbon atoms, an alkoxy group having 1 or more and 6 or less carbon atoms, or a halogen atom.

Specific aspects and preferred aspects of Rb²⁰¹ in Formula (B1), Rb²⁰² in Formula (B2), Rb²⁰⁴ in Formula (B4), and Rb²⁰⁵ in Formula (B5) are the same as each other, so that Rb²⁰¹, Rb²⁰², Rb²⁰⁴, and Rb²⁰⁵ will be collectively referred to as "Rb²⁰⁰".

The alkyl group having 1 or more and 3 or less carbon atoms, as Rb²⁰⁰, may be linear, branched, or cyclic. The number of carbon atoms in the alkyl group is, for example, preferably 1 or 2 and more preferably 1.

Examples of the alkyl group having 1 or more and 3 or less carbon atoms include a methyl group, an ethyl group, a n-propyl group, an isopropyl group, and a cyclopropyl group.

Specific aspects and preferred aspects of Rb⁴⁰¹ in Formula (B1), Rb⁴⁰² in Formula (B2), Rb⁴⁰³ in Formula (B3), Rb⁴⁰⁴ in Formula (B4), Rb⁴⁰⁵ in Formula (B5), Rb⁴⁰⁶ in Formula (B6), Rb⁴⁰⁷ in Formula (B7), and Rb⁴⁰⁸ in Formula (B8) are the same as each other, so that Rb⁴⁰¹, Rb⁴⁰², Rb⁴⁰³, Rb⁴⁰⁴, Rb⁴⁰⁵, Rb⁴⁰⁶, Rb⁴⁰⁷, and Rb⁴⁰⁸ will be collectively referred to as "Rb⁴⁰⁰".

The alkyl group having 1 or more and 4 or less carbon atoms, as Rb⁴⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, a n-propyl group, and a n-butyl group.

Examples of the branched alkyl group having 3 or 4 carbon atoms include an isopropyl group, an isobutyl group, a sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁴⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, a n-propoxy group, a n-butoxy group, a n-pentyloxy group, and a n-hexyloxy group.

Examples of the branched alkoxy group having 3 or more and 6 or less carbon atoms include an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁴⁰⁰ include a fluorine atom, a chlorine atom, a bromine atom, and an iodine atom.

Specific aspects and preferred aspects of Rb⁵⁰¹ in Formula (B1), Rb⁵⁰² in Formula (B2), Rb⁵⁰³ in Formula (B3), Rb⁵⁰⁴ in Formula (B4), Rb⁵⁰⁵ in Formula (B5), Rb⁵⁰⁶ in Formula (B6), Rb⁵⁰⁷ in Formula (B7), and Rb⁵⁰⁸ in Formula (B8) are the same as each other, so that Rb⁵⁰¹, Rb⁵⁰², Rb⁵⁰³, Rb⁵⁰⁴, Rb⁵⁰⁵, Rb⁵⁰⁶, Rb⁵⁰⁷, and Rb⁵⁰⁸ will be collectively referred to as "Rb⁵⁰⁰"*.*

The alkyl group having 1 or more and 4 or less carbon atoms, as Rb⁵⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, a n-propyl group, and a n-butyl group.

Examples of the branched alkyl group having 3 or 4 carbon atoms include an isopropyl group, an isobutyl group, a sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁵⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, a n-propoxy group, a n-butoxy group, a n-pentyloxy group, and a n-hexyloxy group.

Examples of the branched alkoxy group having 3 or more and 6 or less carbon atoms include an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁵⁰⁰ include a fluorine atom, a chlorine atom, a bromine atom, and an iodine atom.

Specific aspects and preferred aspects of Rb⁸⁰¹ in Formula (B1), Rb⁸⁰² in Formula (B2), Rb⁸⁰³ in Formula (B3), Rb⁸⁰⁴ in Formula (B4), Rb⁸⁰⁵ in Formula (B5), Rb⁸⁰⁶ in Formula (B6), Rb⁸⁰⁷ in Formula (B7), and Rb⁸⁰⁸ in Formula (B8) are the same as each other, so that Rb⁸⁰¹, Rb⁸⁰², Rb⁸⁰³, Rb⁸⁰⁴, Rb⁸⁰⁵, Rb⁸⁰⁶, Rb⁸⁰⁷, and Rb⁸⁰⁸ will be collectively referred to as "Rb⁸⁰⁰".

The alkyl group having 1 or more and 4 or less carbon atoms, as Rb⁸⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, a n-propyl group, and a n-butyl group.

Examples of the branched alkyl group having 3 or 4 carbon atoms include an isopropyl group, an isobutyl group, a sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁸⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, a n-propoxy group, a n-butoxy group, a n-pentyloxy group, and a n-hexyloxy group.

Examples of the branched alkoxy group having 3 or more and 6 or less carbon atoms include an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁸⁰⁰ include a fluorine atom, a chlorine atom, a bromine atom, and an iodine atom.

Specific aspects and preferred aspects of Rb⁹⁰¹ in Formula (B1), Rb⁹⁰² in Formula (B2), Rb⁹⁰³ in Formula (B3), Rb⁹⁰⁴ in Formula (B4), Rb⁹⁰⁵ in Formula (B5), Rb⁹⁰⁶ in Formula (B6), Rb⁹⁰⁷ in Formula (B7), and Rb⁹⁰⁸ in Formula (B8) are the same as each other, so that Rb⁹⁰¹, Rb⁹⁰², Rb⁹⁰³, Rb⁹⁰⁴, Rb⁹⁰⁵, Rb⁹⁰⁶, Rb⁹⁰⁷, and Rb⁹⁰⁸ will be collectively referred to as "Rb⁹⁰⁰".

The alkyl group having 1 or more and 4 or less carbon atoms, as Rb⁹⁰⁰, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, a n-propyl group, and a n-butyl group.

Examples of the branched alkyl group having 3 or 4 carbon atoms include an isopropyl group, an isobutyl group, a sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as Rb⁹⁰⁰, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, a n-propoxy group, a n-butoxy group, a n-pentyloxy group, and a n-hexyloxy group.

Examples of the branched alkoxy group having 3 or more and 6 or less carbon atoms include an isopropoxy group, an isobutoxy group, a sec-butoxy group, a tert-butoxy group, an isopentyloxy group, a neopentyloxy group, a tert-pentyloxy group, an isohexyloxy group, a sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as Rb⁹⁰⁰ include a fluorine atom, a chlorine atom, a bromine atom, and an iodine atom.

Diol units (B1-1) to (B1-6) are shown below as specific examples of the diol unit (B1). The diol unit (B1) is not limited thereto.

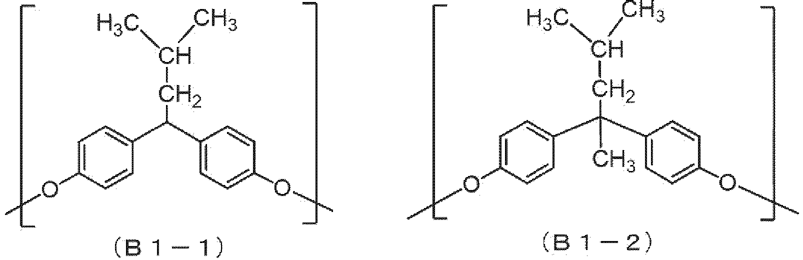

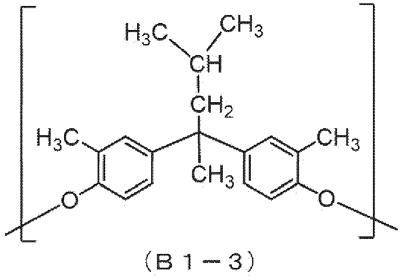

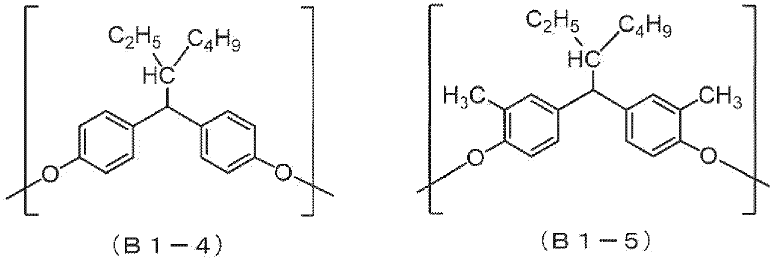

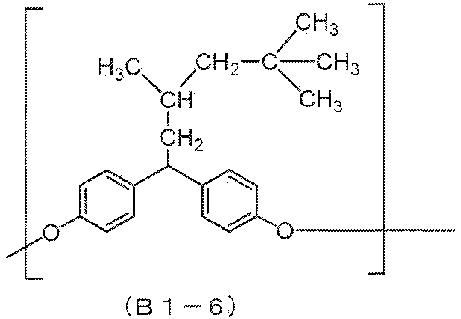

Diol units (B2-1) to (B2-11) are shown below as specific examples of the diol unit (B2). The diol unit (B2) is not limited thereto.

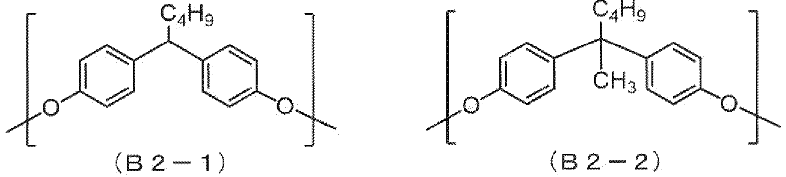

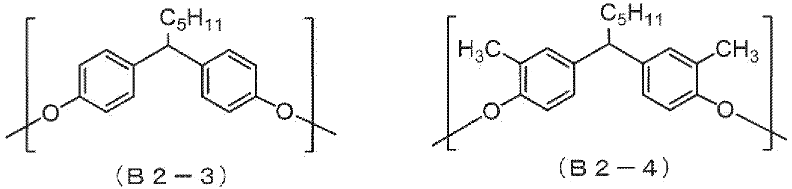

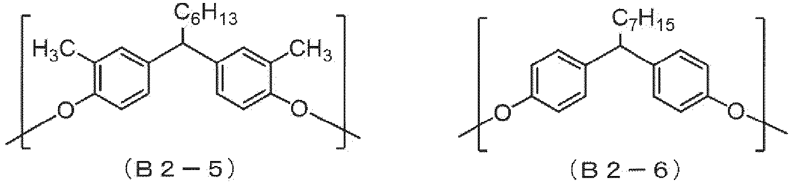

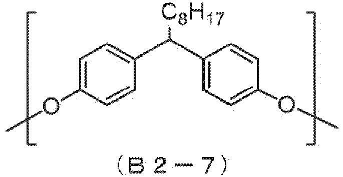

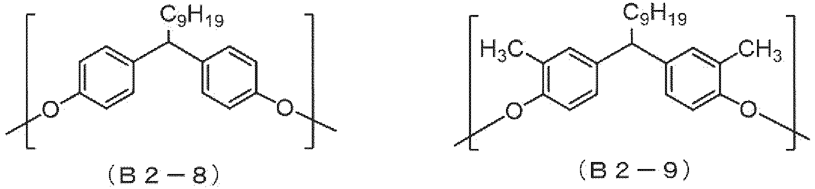

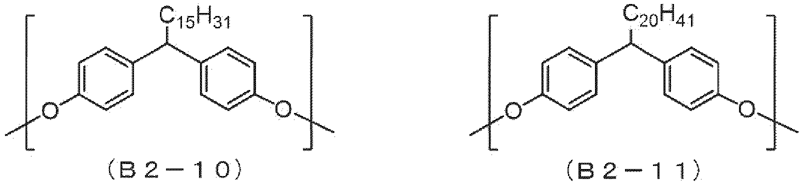

Diol units (B3-1) to (B3-4) are shown below as specific examples of the diol unit (B3). The diol unit (B3) is not limited thereto.

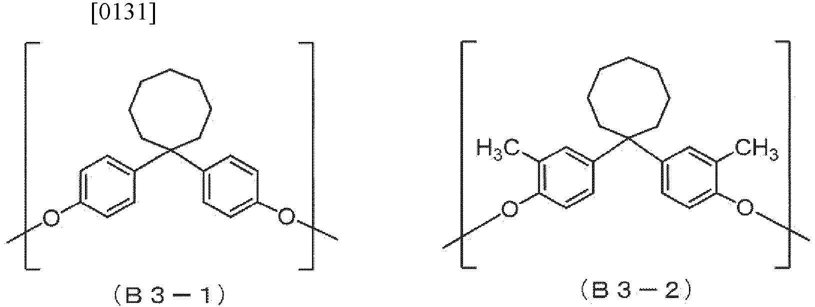

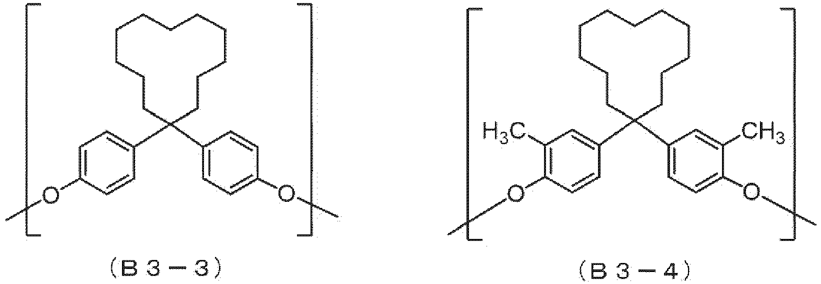

Diol units (B4-1) to (B4-7) are shown below as specific examples of the diol unit (B4). The diol unit (B4) is not limited thereto.

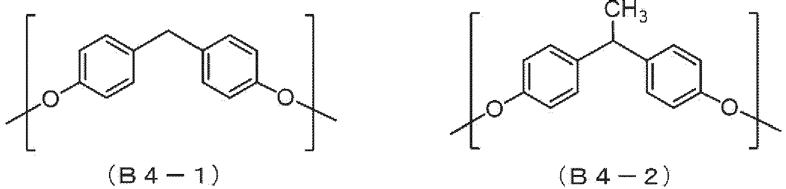

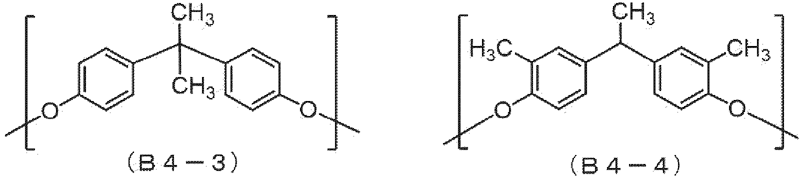

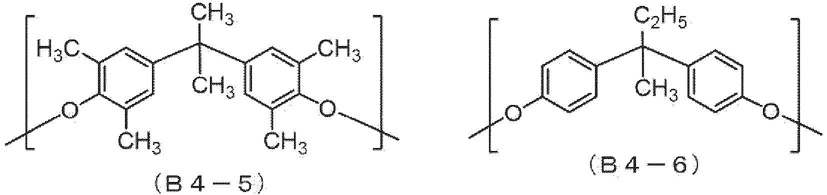

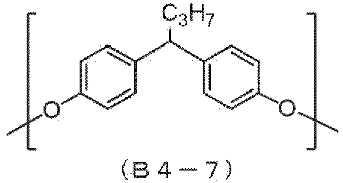

Diol units (B5-1) to (B5-6) are shown below as specific examples of the diol unit (B5). The diol unit (B5) is not limited thereto.

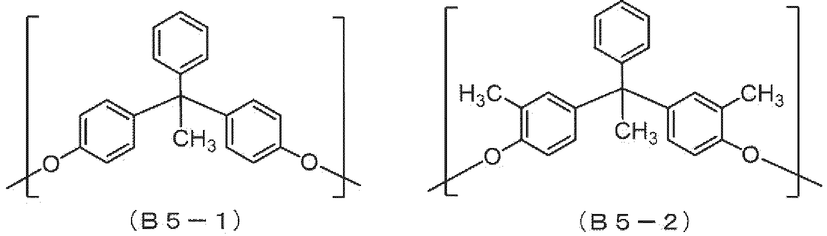

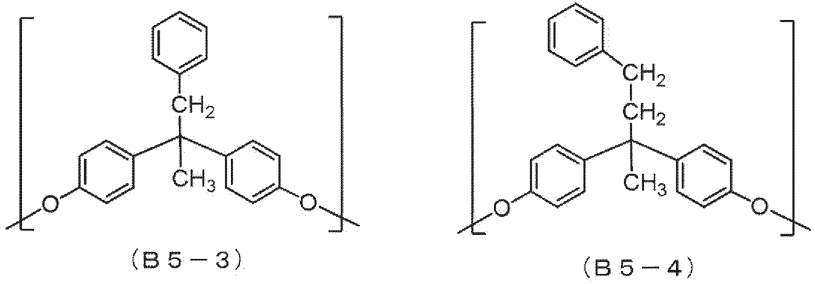

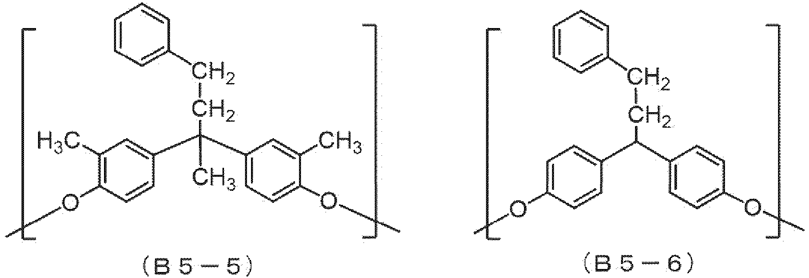

Diol units (B6-1) to (B6-4) are shown below as specific examples of the diol unit (B6). The diol unit (B6) is not limited thereto.

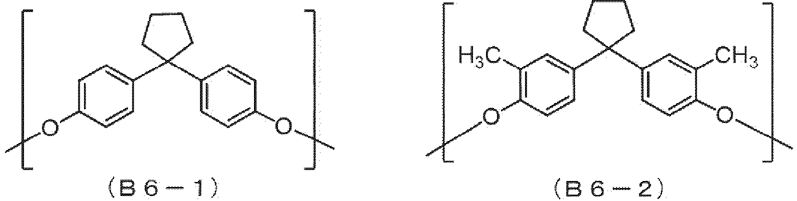

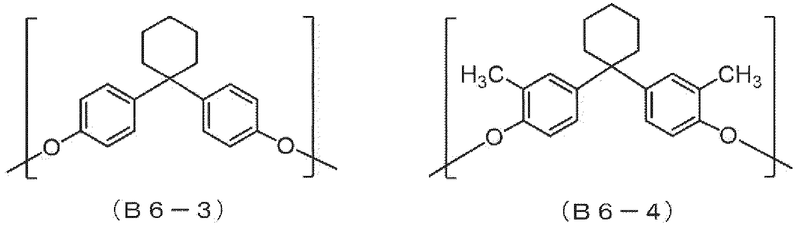

Diol units (B7-1) to (B7-3) are shown below as specific examples of the diol unit (B7). The diol unit (B7) is not limited thereto.

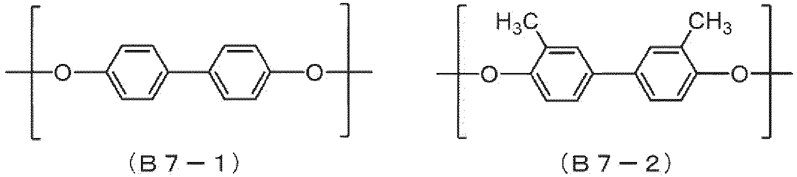

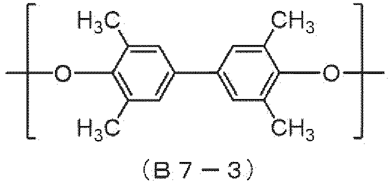

Diol units (B8-1) to (B8-3) are shown below as specific examples of the diol unit (B8). The diol unit (B8) is not limited thereto.

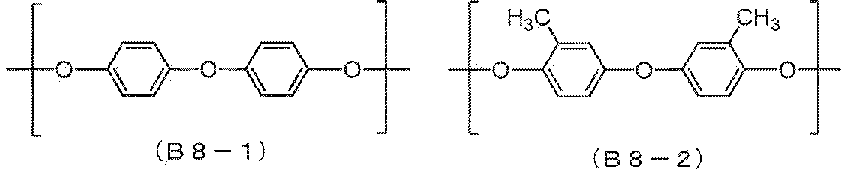

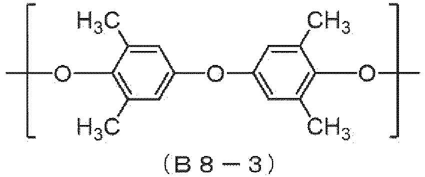

The diol unit (B) in the polyester resin may be used alone or in combination of two or more kinds thereof.

A mass proportion of the diol unit (B) in the polyester resin is, for example, preferably 25% by mass or more and 80% by mass or less.

In a case where the mass proportion of the diol unit (B) is 25% by mass or more, peeling of the photosensitive layer can be suppressed. From the viewpoint, the mass proportion of the diol unit (B) is, for example, more preferably 30% by mass or more, and still more preferably 35% by mass or more.

In a case where the mass proportion of the diol unit (B) is 80% by mass or less, solubility in a coating solution for forming the photosensitive layer is maintained, and thus the abrasion resistance can be improved. From the viewpoint, the mass proportion of the diol unit (B) is, for example, more preferably 75% by mass or less, and still more preferably 70% by mass or less.

Examples of other diol units in addition to the diol unit (B) include aliphatic diol (such as ethylene glycol, diethylene glycol, triethylene glycol, propylene glycol, butanediol, hexanediol, and neopentyl glycol) units, and alicyclic diol (such as cyclohexanediol, cyclohexanedimethanol, and hydrogenated bisphenol A) units. The diol units in the polyester resin (1) may be used alone or in combination of two or more kinds thereof.

In particular, for example, it is preferable that the polyester resin (1) is a polyester resin having a dicarboxylic acid unit represented by (A2) and a diol unit represented by (B1), and it is preferable to be a polyester resin having a dicarboxylic acid unit represented by Formula (A2-3) and a diol unit represented by Formula (B1-4).

In a case where these polyester resins are adopted, even in both repeated image formation at a low image density under a high-temperature and high-humidity environment and repeated image formation at a high image density under a low-temperature and low-humidity environment, it is possible to further achieve favorable cleaning performance while simultaneously reducing wear of the electrophotographic photoreceptor.

A terminal of the polyester resin (1) may be sealed or modified with a terminal-sealing agent, a molecular weight modifier, or the like used in a case of the production. Examples of the terminal-sealing agent or the molecular weight modifier include monohydric phenol, monovalent acid chloride, monohydric alcohol, and monovalent carboxylic acid.

Examples of the monohydric phenol include phenol, o-cresol, m-cresol, p-cresol, o-ethylphenol, m-ethylphenol, p-ethylphenol, o-propylphenol, m-propylphenol, p-propylphenol, o-tert-butylphenol, m-tert-butylphenol, p-tert-butylphenol, pentylphenol, hexylphenol, octylphenol, nonylphenol, a 2,6-dimethylphenol derivative, a 2-methylphenol derivative, o-phenylphenol, m-phenylphenol, p-phenylphenol, o-methoxyphenol, m-methoxyphenol, p-methoxyphenol, 2,3,5-trimethylphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydroxyphenyl)propane, 2-phenyl-2-(2-hydroxyphenyl)propane, and 2-phenyl-2-(3-hydroxyphenyl)propane.

Examples of the monovalent acid chloride include monofunctional acid halides such as benzoyl chloride, benzoic acid chloride, methanesulfonyl chloride, phenylchloroformate, acetic acid chloride, butyric acid chloride, octyl acid chloride, benzenesulfonyl chloride, benzenesulfinyl chloride, sulfinyl chloride, benzene phosphonyl chloride, and substituents thereof.

Examples of the monohydric alcohol include methanol, ethanol, n-propanol, isopropanol, n-butanol, 2-butanol, pentanol, hexanol, dodecyl alcohol, stearyl alcohol, benzyl alcohol, and phenethyl alcohol.

Examples of the monovalent carboxylic acid include acetic acid, propionic acid, octanoic acid, cyclohexanecarboxylic acid, benzoic acid, toluic acid, phenylacetic acid, p-tert-butylbenzoic acid, and p-methoxyphenylacetic acid.

A weight-average molecular weight of the polyester resin (1) is, for example, preferably 30,000 or more and 300,000 or less, more preferably 40,000 or more and 250,000 or less, and still more preferably 50,000 or more and 200,000 or less.

The molecular weight of the polyester resin (1) is a molecular weight measured by gel permeation chromatography (GPC) in terms of polystyrene. The GPC is performed using tetrahydrofuran as an eluent.

Examples of a method of producing the polyester resin (1) include an interfacial polymerization method, a solution polymerization method, and a melt polymerization method.

Details of the charge transport layer containing the polyester resin (1) and the single layer-type photosensitive layer containing the polyester resin (1) will be described later.

Hereinafter, each configuration of the photoreceptor 12 (12A or 12B) will be described. The reference numerals will not be provided.

### [Conductive Substrate]

Examples of the conductive substrate include metal plates, metal drums, metal belts, or the like, containing a metal (such as aluminum, copper, zinc, chromium, nickel, molybdenum, vanadium, indium, gold, and platinum) or an alloy (such as stainless steel). In addition, examples of the conductive substrate also include paper, a resin film, a belt, or the like, that is obtained by being coated, vapor-deposited, or laminated with a conductive compound (such as a conductive polymer and indium oxide), a metal (such as aluminum, palladium, and gold) or an alloy. Here, the term "conductive" denotes that a volume resistivity is less than 1 × 10¹³ Ω·cm.

In a case where the photoreceptor is used in a laser printer, for example, it is preferable that a surface of the conductive substrate is roughened such that a centerline average roughness Ra thereof is 0.04 µm or more and 0.5 µm or less for the purpose of suppressing interference fringes from occurring in a case of irradiation with laser beams. In a case where incoherent light is used as a light source, roughening of the surface to prevent the interference fringes is not particularly necessary, and it is appropriate for longer life because occurrence of defects due to the roughness of the surface of the conductive substrate is suppressed.

Examples of the roughening method include wet honing performed by suspending an abrasive in water and spraying the suspension to the conductive substrate, centerless grinding performed by pressure-welding the conductive substrate against a rotating grindstone and continuously grinding the conductive substrate, and an anodizing treatment.

Examples of the roughening method also include a method of dispersing conductive or semi-conductive powder in a resin without roughening the surface of the conductive substrate to form a layer on the surface of the conductive substrate, and performing roughening using the particles dispersed in the layer.

The roughening treatment by anodization is a treatment of forming an oxide film on the surface of the conductive substrate by carrying out anodization in an electrolytic solution using a conductive substrate made of a metal (for example, aluminum) as an anode. Examples of the electrolytic solution include a sulfuric acid solution and an oxalic acid solution. However, a porous anodized film formed by the anodization is chemically active in a natural state, is easily contaminated, and has a large resistance fluctuation depending on the environment. Therefore, for example, it is preferable that a sealing treatment is performed on the porous anodized film so that micropores of the oxide film are closed by volume expansion due to a hydration reaction in pressurized steam or boiling water (a metal salt such as nickel may be added thereto) for a change into a more stable a hydrous oxide.

A film thickness of the anodized film is, for example, preferably 0.3 µm or more and 15 µm or less. In a case where the film thickness is within the above-described range, barrier properties against injection tend to be exhibited, and an increase in the residual potential due to repeated use tends to be suppressed.

The conductive substrate may be subjected to a treatment with an acidic treatment liquid or a boehmite treatment.

The treatment with an acidic treatment liquid is carried out, for example, as follows. First, an acidic treatment liquid containing phosphoric acid, chromic acid, and hydrofluoric acid is prepared. As a blending proportion of the phosphoric acid, chromic acid, and hydrofluoric acid to the acidic treatment liquid, for example, a concentration of the phosphoric acid may be in a range of 10% by mass or more and 11% by mass or less, a concentration of the chromic acid may be in a range of 3% by mass or more and 5% by mass or less, and a concentration of the hydrofluoric acid may be in a range of 0.5% by mass or more and 2% by mass or less, and a concentration of all of these acids may be in a range of 13.5% by mass or more and 18% by mass or less. A treatment temperature is, for example, preferably 42°C or higher and 48°C or lower. A film thickness of the coating film is, for example, preferably 0.3 µm or more and 15 µm or less.

The boehmite treatment is carried out, for example, by dipping the base material in pure water at 90°C or higher and 100°C or lower for 5 minutes to 60 minutes, or by bringing the base material into contact with heated steam at 90°C or higher and 120°C or lower for 5 minutes to 60 minutes. A film thickness of the coating film is, for example, preferably 0.1 µm or more and 5 µm or less. The coating film may be further subjected to an anodizing treatment using an electrolytic solution having low film solubility, such as adipic acid, boric acid, a borate, a phosphate, a phthalate, a maleate, a benzoate, a tartrate, or a citrate.

### [Undercoat Layer]

The undercoat layer is, for example, a layer containing inorganic particles and a binder resin.

Examples of the inorganic particles include inorganic particles having a powder resistance (volume resistivity) of 1 × 10² Ω·cm or more and 1 × 10¹¹ Ω·cm or less.

Among the above, as the inorganic particles having the above-described resistance value, for example, metal oxide particles such as tin oxide particles, titanium oxide particles, zinc oxide particles, and zirconium oxide particles may be used, and zinc oxide particles are particularly preferable.

A specific surface area of the inorganic particles, measured by a BET method, may be, for example, 10 m²/g or more.

A volume-average particle diameter of the inorganic particles may be 50 nm or more and 2,000 nm or less (for example, preferably 60 nm or more and 1,000 nm or less).

A content of the inorganic particles is, for example, preferably 10% by mass or more and 80% by mass or less, and more preferably 40% by mass or more and 80% by mass or less with respect to the binder resin.

The inorganic particles may be subjected to a surface treatment. As the inorganic particles, two or more kinds of inorganic particles subjected to different surface treatments or two or more kinds of inorganic particles having different particle diameters may be used in a form of a mixture.

Examples of a surface treatment agent include a silane coupling agent, a titanate-based coupling agent, an aluminum-based coupling agent, and a surfactant. In particular, for example, a silane coupling agent is preferable, and a silane coupling agent having an amino group is more preferable.

Examples of the silane coupling agent having an amino group include 3-aminopropyltriethoxysilane, N-2-(aminoethyl)-3-aminopropyltrimethoxysilane, N-2-(aminoethyl)-3-aminopropylmethyldimethoxysilane, and N,N-bis(2-hydroxyethyl)-3-aminopropyltriethoxysilane; but the present invention is not limited thereto.

The silane coupling agent may be used in a form of a mixture of two or more kinds thereof. For example, the silane coupling agent having an amino group and other silane coupling agents may be used in combination. Examples of the other silane coupling agents include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl) -3-aminopropyltriethoxysilane, and 3-chloropropyltrimethoxysilane; but the present invention is not limited thereto.

A surface treatment method using the surface treatment agent may be any method as long as the method is a known method, and any of a dry method or a wet method may be used.

A treatment amount of the surface treatment agent is, for example, preferably 0.5% by mass or more and 10% by mass or less with respect to the inorganic particles.

Here, for example, the undercoat layer may contain an electron-accepting compound (acceptor compound) together with the inorganic particles from the viewpoint of enhancing long-term stability of electrical properties and carrier blocking properties.

Examples of the electron-accepting compound include electron-transporting substances, for example, a compound having an anthraquinone structure; a quinone-based compound such as chloranil and bromanil; a tetracyanoquinodimethane-based compound; a fluorenone compound such as 2,4,7-trinitrofluorenone and 2,4,5,7-tetranitro-9-fluorenone; an oxadiazole-based compound such as 2-(4-biphenyl)-5-(4-t-butylphenyl)-1,3,4-oxadiazole, 2,5-bis(4-naphthyl)-1,3,4-oxadiazole, and 2,5-bis(4-diethylaminophenyl)-1,3,4-oxadiazole; a xanthone-based compound; a thiophene compound; a diphenoquinone compound such as 3,3',5,5'-tetra-t-butyldiphenoquinone; and a benzophenone compound.

In particular, as the electron-accepting compound, for example, a compound having an anthraquinone structure is preferable. As the compound having an anthraquinone structure, for example, a hydroxyanthraquinone compound, an aminoanthraquinone compound, or an aminohydroxyanthraquinone compound is preferable; and specifically, anthraquinone, alizarin, quinizarin, anthrarufin, purpurin, or a derivative thereof is preferable.

The electron-accepting compound may be contained in the undercoat layer in a state of being dispersed with the inorganic particles, or in a state of being attached to the surface of the inorganic particles.

Examples of a method of attaching the electron-accepting compound to the surface of the inorganic particles include a dry method and a wet method.

The dry method is, for example, a method of attaching the electron-accepting compound to the surface of the inorganic particles by adding the electron-accepting compound dropwise to the inorganic particles directly or by dissolving the electron-accepting compound in an organic solvent while stirring the inorganic particles with a mixer having a large shearing force and spraying the mixture together with dry air or nitrogen gas. For example, the dropwise addition or spraying of the electron-accepting compound may be performed at a temperature equal to or lower than a boiling point of the solvent. After the dropwise addition or spraying of the electron-accepting compound, the mixture may be further baked at 100°C or higher. The baking is not particularly limited as long as the temperature and the time are adjusted such that electrophotographic characteristics can be obtained.

The wet method is, for example, a method of attaching the electron-accepting compound to the surface of the inorganic particles by adding the electron-accepting compound to inorganic particles while dispersing the inorganic particles in a solvent by performing using a stirrer, an ultrasonic disperser, a sand mill, an attritor, or a ball mill, stirring or dispersing the mixture, and removing the solvent. The solvent removing method is carried out by, for example, filtration or distillation so that the solvent is distilled off. After removal of the solvent, the mixture may be further baked at 100°C or higher. The baking is not particularly limited as long as the temperature and the time are adjusted such that electrophotographic characteristics can be obtained. In the wet method, the moisture contained in the inorganic particles may be removed before the electron-accepting compound is added, and examples thereof include a method of removing the moisture while stirring and heating the inorganic particles in a solvent and a method of removing the moisture by azeotropically boiling the inorganic particles with a solvent.

The electron-accepting compound may be attached before or after the inorganic particles are subjected to the surface treatment with the surface treatment agent or simultaneously with the surface treatment with the surface treatment agent.

A content of the electron-accepting compound may be, for example, 0.01% by mass or more and 20% by mass or less, preferably 0.01% by mass or more and 10% by mass or less with respect to the inorganic particles.

Examples of the binder resin used for the undercoat layer include a known polymer compound such as an acetal resin (such as polyvinyl butyral), a polyvinyl alcohol resin, a polyvinyl acetal resin, a casein resin, a polyamide resin, a cellulose resin, gelatin, a polyurethane resin, a polyester resin, an unsaturated polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a urea resin, a phenol resin, a phenol-formaldehyde resin, a melamine resin, a urethane resin, an alkyd resin, and an epoxy resin; a zirconium chelate compound; a titanium chelate compound; an aluminum chelate compound; a titanium alkoxide compound; an organic titanium compound; and a known material such as a silane coupling agent.

Examples of the binder resin used for the undercoat layer also include a charge-transporting resin having a charge-transporting group, and a conductive resin (for example, polyaniline or the like).

Among the above, as the binder resin used for the undercoat layer, for example, a resin insoluble in a coating solvent of an upper layer is suitable; and a resin obtained by a reaction between at least one resin selected from the group consisting of a thermosetting resin such as a urea resin, a phenol resin, a phenol-formaldehyde resin, a melamine resin, a urethane resin, an unsaturated polyester resin, an alkyd resin, or an epoxy resin; a polyamide resin, a polyester resin, a polyether resin, a methacrylic resin, an acrylic resin, a polyvinyl alcohol resin, and a polyvinyl acetal resin, and a curing agent is particularly suitable.

In a case where these binder resins are used in combination of two or more kinds thereof, a mixing proportion thereof is set as necessary.

The undercoat layer may contain various additives for improving the electrical properties, the environmental stability, and the image quality.

Examples of the additive include known materials, for example, an electron-transporting pigment such as a polycyclic condensed pigment or an azo-based pigment, a zirconium chelate compound, a titanium chelate compound, an aluminum chelate compound, a titanium alkoxide compound, an organic titanium compound, and a silane coupling agent. The silane coupling agent is used for the surface treatment of the inorganic particles as described above, but may be further added to the undercoat layer as the additive.

Examples of the silane coupling agent as the additive include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl) -3-aminopropyltriethoxysilane, and 3-chloropropyltrimethoxysilane.

Examples of the zirconium chelate compound include zirconium butoxide, ethyl zirconium acetoacetate, zirconium triethanolamine, acetylacetonate zirconium butoxide, ethyl zirconium butoxide acetoacetate, zirconium acetate, zirconium oxalate, zirconium lactate, zirconium phosphonate, zirconium octanoate, zirconium naphthenate, zirconium laurate, zirconium stearate, zirconium isostearate, zirconium butoxide methacrylate, stearate zirconium butoxide, and isostearate zirconium butoxide.

Examples of the titanium chelate compound include tetraisopropyl titanate, tetranormal butyl titanate, a butyl titanate dimer, tetra(2-ethylhexyl) titanate, titanium acetylacetonate, polytitanium acetylacetonate, titanium octylene glycolate, titanium lactate ammonium salt, titanium lactate, titanium lactate ethyl ester, titanium triethanol aminate, and polyhydroxy titanium stearate.

Examples of the aluminum chelate compound include aluminum isopropylate, monobutoxyaluminum diisopropylate, aluminum butyrate, diethylacetoacetate aluminum diisopropylate, and aluminum tris(ethylacetoacetate).

These additives may be used alone or in a form of a mixture or a polycondensate of a plurality of compounds.

The undercoat layer may have, for example, a Vickers hardness of 35 or more.

For example, the surface roughness (ten-point average roughness) of the undercoat layer may be adjusted to 1/2 from 1/(4n) (n represents a refractive index of an upper layer) of a laser wavelength λ for exposure to be used to suppress moire fringes.

Resin particles or the like may be added to the undercoat layer to adjust the surface roughness. Examples of the resin particles include silicone resin particles and crosslinked polymethyl methacrylate resin particles. In addition, the surface of the undercoat layer may be polished to adjust the surface roughness. Examples of a polishing method include buff polishing, a sandblast treatment, wet honing, and a grinding treatment.

The formation of the undercoat layer is not particularly limited, and a known forming method is used. For example, a coating film of a coating solution for forming the undercoat layer, in which the above-described components are added to a solvent, is formed, and the coating film is dried and then heated as necessary.

Examples of the solvent for preparing the coating solution for forming the undercoat layer include known organic solvents such as an alcohol-based solvent, an aromatic hydrocarbon solvent, a halogenated hydrocarbon solvent, a ketone-based solvent, a ketone alcohol-based solvent, an ether-based solvent, and an ester-based solvent.

Specific examples of the solvent include typical organic solvents such as methanol, ethanol, n-propanol, iso-propanol, n-butanol, benzyl alcohol, methyl cellosolve, ethyl cellosolve, acetone, methyl ethyl ketone, cyclohexanone, methyl acetate, ethyl acetate, n-butyl acetate, dioxane, tetrahydrofuran, methylene chloride, chloroform, chlorobenzene, and toluene.

Examples of the method of dispersing the inorganic particles in a case of preparing the coating solution for forming the undercoat layer include known methods such as a roll mill, a ball mill, a vibration ball mill, an attritor, a sand mill, a colloid mill, and a paint shaker.

Examples of the method of coating the conductive substrate with the coating solution for forming the undercoat layer include typical coating methods such as a blade coating method, a wire bar coating method, a spray coating method, a dip coating method, a bead coating method, an air knife coating method, and a curtain coating method.

A film thickness of the undercoat layer is set to, for example, preferably 15 µm or more and more preferably in a range of 20 µm or more and 50 µm or less.

### [Interlayer]

An interlayer may be further provided between the undercoat layer and the photosensitive layer.

The interlayer is, for example, a layer containing a resin. Examples of the resin used for the interlayer include polymer compounds such as an acetal resin (for example, polyvinyl butyral or the like), a polyvinyl alcohol resin, a polyvinyl acetal resin, a casein resin, a polyamide resin, a cellulose resin, gelatin, a polyurethane resin, a polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a phenol-formaldehyde resin, and a melamine resin.

The interlayer may be a layer containing an organometallic compound. Examples of the organometallic compound used for the interlayer include organometallic compounds containing a metal atom such as zirconium, titanium, aluminum, manganese, and silicon.

The compounds used for the interlayer may be used alone or in a form of a mixture or a polycondensate of a plurality of compounds.

Among the above, for example, it is preferable that the interlayer is a layer containing an organometallic compound containing a zirconium atom or a silicon atom.

The formation of the interlayer is not particularly limited, and a known forming method is used. For example, a coating film of a coating solution for forming the interlayer, in which the above-described components are added to a solvent, is formed, and the coating film is dried and then heated as necessary.

Examples of the coating method of forming the interlayer include typical methods such as a dip coating method, a push-up coating method, a wire bar coating method, a spray coating method, a blade coating method, an air knife coating method, and a curtain coating method.

A film thickness of the interlayer is set to, for example, preferably in a range of 0.1 µm or more and 3 µm or less. The interlayer may be used as the undercoat layer.

### [Charge Generation Layer]

A charge generation layer is, for example, a layer containing a charge generation material and a binder resin. In addition, the charge generation layer may be a deposition layer of the charge generation material. For example, the deposition layer of the charge generation material is suitable in a case where an incoherent light source such as a light emitting diode (LED) and an organic electroluminescence (EL) image array is used.

Examples of the charge generation material include an azo pigment such as a bisazo pigment and a trisazo pigment; a fused ring aromatic pigment such as dibromoanthanthrone; a perylene pigment; a pyrrolopyrrole pigment; a phthalocyanine pigment; zinc oxide; and trigonal selenium.

Among the above, for example, a metal phthalocyanine pigment or a metal-free phthalocyanine pigment is preferably used as the charge generation material, in order to deal with laser exposure in a near-infrared region. Specifically, for example, hydroxy gallium phthalocyanine, chlorogallium phthalocyanine, dichlorotin phthalocyanine, or titanyl phthalocyanine is more preferable.

On the other hand, for example, a fused ring aromatic pigment such as dibromoanthanthrone, a thioindigo-based pigment, a porphyrazine compound, zinc oxide, trigonal selenium, or a bisazo pigment is preferable as the charge generation material in order to deal with laser exposure in a near-ultraviolet region.

The above-described charge generation material may be used even in a case where a non-coherent light source such as an LED having a central wavelength of light emission in a range of 450 nm or more and 780 nm or less and an organic EL image array is used.

In a case where a n-type semiconductor such as a fused ring aromatic pigment, a perylene pigment, and an azo pigment is used as the charge generation material, a dark current is unlikely to be generated, and image defects referred to as black spots can be suppressed even in a case in which a thin film is used as the photosensitive layer. The n-type is determined by the polarity of the flowing photocurrent using a typically used time-of-flight method, and a material in which electrons more easily flow as carriers than positive holes is determined as the n-type.

The binder resin used for the charge generation layer is selected from a wide range of insulating resins, and the binder resin may be selected from organic photoconductive polymers such as poly-N-vinylcarbazole, polyvinyl anthracene, polyvinylpyrene, and polysilane.

Examples of the binder resin include a polyvinyl butyral resin, a polyarylate resin (polycondensate of bisphenols and aromatic divalent carboxylic acid, or the like), a polycarbonate resin, a polyester resin, a phenoxy resin, a vinyl chloride-vinyl acetate copolymer, a polyamide resin, an acrylic resin, a polyacrylamide resin, a polyvinylpyridine resin, a cellulose resin, a urethane resin, an epoxy resin, casein, a polyvinyl alcohol resin, and a polyvinylpyrrolidone resin. Here, the term "insulating" means that a volume resistivity is 1 × 10¹³ Ω·cm or more.

The binder resins may be used alone or in a form of a mixture of two or more kinds thereof.

A blending ratio between the charge generation material and the binder resin is, for example, preferably in a range of 10: 1 to 1:10 in terms of mass ratio.

The charge generation layer may also contain other known additives.

The formation of the charge generation layer is not particularly limited, and a known forming method is used. For example, a coating film of a coating solution for forming the charge generation layer, in which the above-described components are added to a solvent, is formed, and the coating film is dried and then heated as necessary. The charge generation layer may be formed by a vapor deposition of the charge generation material. For example, the formation of the charge generation layer by the vapor deposition is particularly preferable in a case where the fused ring aromatic pigment or the perylene pigment is used as the charge generation material.

Examples of the solvent for preparing the coating solution for forming the charge generation layer include methanol, ethanol, n-propanol, n-butanol, benzyl alcohol, methyl cellosolve, ethyl cellosolve, acetone, methyl ethyl ketone, cyclohexanone, methyl acetate, n-butyl acetate, dioxane, tetrahydrofuran, methylene chloride, chloroform, chlorobenzene, and toluene. The solvents are used alone or in a form of a mixture of two or more kinds thereof.

As a method of dispersing particles (for example, the charge generation material) in the coating solution for forming the charge generation layer, for example, a media disperser such as a ball mill, a vibration ball mill, an attritor, a sand mill, and a horizontal sand mill, or a medialess disperser such as a stirrer, an ultrasonic disperser, a roll mill, and a high-pressure homogenizer is used. Examples of the high-pressure homogenizer include a collision type high-pressure homogenizer in which a dispersion liquid is dispersed by a liquid-liquid collision or a liquid-wall collision in a high-pressure state, and a penetration type high-pressure homogenizer in which a dispersion liquid is dispersed by causing the dispersion liquid to penetrate through a micro-flow path in a high-pressure state.

During the dispersion, it is effective to set an average particle diameter of the charge generation material in the coating solution for forming the charge generation layer to 0.5 µm or less, for example, preferably 0.3 µm or less and more preferably 0.15 µm or less.

Examples of the method of coating the undercoat layer (or the interlayer) with the coating solution for forming the charge generation layer include typical methods such as a blade coating method, a wire bar coating method, a spray coating method, a dip coating method, a bead coating method, an air knife coating method, and a curtain coating method.

A film thickness of the charge generation layer is set to, for example, preferably in a range of 0.1 µm or more and 5.0 µm or less and more preferably in a range of 0.2 µm or more and 2.0 µm or less.

### [Charge Transport Layer]

A charge transport layer is, for example, a layer containing a charge transport material and a binder resin.

In addition, the charge transport layer contains the above-described polyester resin (1) as a binder resin.

The charge transport layer may contain a binder resin other than the above-described polyester resin (1). However, in the charge transport layer, a proportion of the above-described polyester resin (1) in the entire binder resin is, for example, preferably 50% by mass or more, more preferably 80% by mass or more, still more preferably 90% by mass or more, and even more preferably 100% by mass.

Examples of the charge transport material include a quinone-based compound such as p-benzoquinone, chloranil, bromanil, and anthraquinone; a tetracyanoquinodimethane-based compound; a fluorenone compound such as 2,4,7-trinitrofluorenone; a xanthone-based compound; a benzophenone-based compound; a cyanovinyl-based compound; and an electron-transporting compound such as an ethylene-based compound. Examples of the charge transport material also include a positive hole-transporting compound such as a triarylamine-based compound, a benzidine-based compound, an arylalkane-based compound, an aryl-substituted ethylene-based compound, a stilbene-based compound, an anthracene-based compound, and a hydrazone-based compound. The charge transport materials may be used alone or in combination of two or more kinds thereof, but are not limited thereto.

From the viewpoint of charge mobility, for example, a triarylamine derivative represented by Structural Formula (a-1) or a benzidine derivative represented by Structural Formula (a-2) is preferable as the charge transport material.

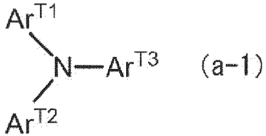

In Structural Formula (a-1), Ar^{T1}, Ar^{T2}, and Ar^{T3} each independently represent a substituted or unsubstituted aryl group, -C₆H₄-C(R^{T4})=C(R^{T5})(R^{T6}), or -C₆H₄-CH=CH-CH=C(R^{T7})(R^{T8}). R^{T4}, R^{T5}, R^{T6}, R^{T7}, and R^{T8} each independently represent a hydrogen atom, a substituted or unsubstituted alkyl group, or a substituted or unsubstituted aryl group.

Examples of the substituent of each group described above include a halogen atom, an alkyl group having 1 or more and 5 or less carbon atoms, and an alkoxy group having 1 or more and 5 or less carbon atoms. In addition, examples of the substituent of each group described above also include a substituted amino group substituted with an alkyl group having 1 or more and 3 or less carbon atoms.

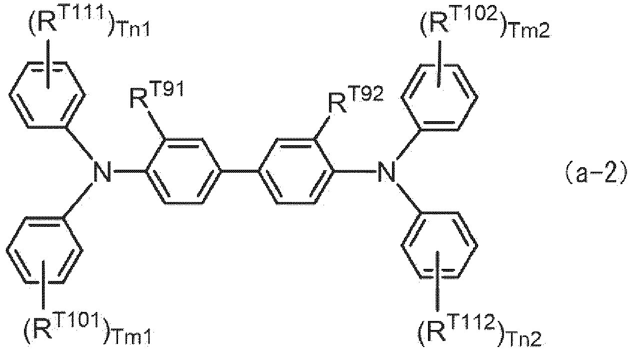

In Structural Formula (a-2), R^{T91} and R^{T92} each independently represent a hydrogen atom, a halogen atom, an alkyl group having 1 or more and 5 or less carbon atoms, or an alkoxy group having 1 or more and 5 or less carbon atoms. R^{T101}, R^{T102}, R^{T111}, and R^{T112} each independently represent a halogen atom, an alkyl group having 1 or more and 5 or less carbon atoms, an alkoxy group having 1 or more and 5 or less carbon atoms, an amino group substituted with an alkyl group having 1 or more and 2 or less carbon atoms, a substituted or unsubstituted aryl group, -C(R^{T12})-C(R^{T13})(R^{T14}), or -CH=CH-CH=C(R^{T15})(R^{T16}), in which R^{T12}, R^{T13}, R^{T14}, R^{T15}, and R^{T16} each independently represent a hydrogen atom, a substituted or unsubstituted alkyl group, or a substituted or unsubstituted aryl group. Tm1, Tm2, Tn1, and Tn2 each independently represent an integer of 0 or more and 2 or less.

Examples of the substituent of each group described above include a halogen atom, an alkyl group having 1 or more and 5 or less carbon atoms, and an alkoxy group having 1 or more and 5 or less carbon atoms. In addition, examples of the substituent of each group described above also include a substituted amino group substituted with an alkyl group having 1 or more and 3 or less carbon atoms.

Among the triarylamine derivative represented by Structural Formula (a-1) and the benzidine derivative represented by Structural Formula (a-2), for example, a triarylamine derivative having "-C₆H₄-CH=CH-CH=C(R^{T7})(R^{T8})" or a benzidine derivative having "-CH=CH-CH=C(R^{T15})(R^{T16})" is particularly preferable from the viewpoint of the charge mobility.

Examples of other binder resins used for the charge transport layer include a polycarbonate resin, a polyester resin, a polyarylate resin, a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, poly-N-vinylcarbazole, and polysilane. Among the above, for example, a polycarbonate resin or a polyarylate resin is preferable as the binder resin. The binder resins may be used alone or in combination of two or more kinds thereof.

A blending ratio between the charge transport material and the binder resin is, for example, preferably 10:1 to 1:5 in terms of mass ratio.

The charge transport layer may also contain other known additives.

A known forming method is applied to the formation of the charge transport layer. For example, the charge transport layer is formed by forming a coating film of a coating solution for forming a charge transport layer, in which a material is added to a solvent, drying the coating film, and heating the coating film as necessary.

Examples of the solvent for preparing the coating solution for forming the charge transport layer include organic solvents, for example, aromatic hydrocarbons such as benzene, toluene, xylene, and chlorobenzene; ketones such as acetone and 2-butanone; halogenated aliphatic hydrocarbons such as methylene chloride, chloroform, and ethylene chloride; and cyclic or linear ethers such as tetrahydrofuran and ethyl ether. The solvents are used alone or in a form of a mixture of two or more kinds thereof.

Examples of the coating method of coating the charge generation layer with the coating solution for forming the charge transport layer include methods such as a blade coating method, a wire bar coating method, a spray coating method, a dip coating method, a bead coating method, an air knife coating method, and a curtain coating method.

A film thickness of the charge transport layer is set to, for example, preferably in a range of 5 µm or more and 50 µm or less and more preferably in a range of 10 µm or more and 30 µm or less.

### [Single Layer-Type Photosensitive Layer]

The single layer-type photosensitive layer is, for example, a layer containing a charge generation material, a charge transport material, a binder resin, and as necessary, other additives. The materials are the same as the materials described in the sections of the charge generation layer and the charge transport layer.

However, the single layer-type photosensitive layer contains the above-described polyester resin (1) as a binder resin.

A content of the charge generation material in the single layer-type photosensitive layer may be, for example, 0.1% by mass or more and 10% by mass or less, preferably 0.8% by mass or more and 5% by mass or less with respect to the total solid content.

The content of the charge transport material in the single layer-type photosensitive layer may be, for example, 5% by mass or more and 50% by mass or less with respect to the total solid content.

A method of forming the single layer-type photosensitive layer is the same as the method of forming the charge generation layer or the charge transport layer.

A film thickness of the single layer-type photosensitive layer may be, for example, 5 µm or more and 50 µm or less, preferably 10 µm or more and 40 µm or less.

### <Charging Device>

The charging device 15 charges the surface of the photoreceptor 12. The charging device 15 is provided, for example, on the surface of the photoreceptor 12 in a contact or non-contact manner, and includes a charging member 14 that charges the surface of the photoreceptor 12 and a power supply 28 (example of a voltage applying unit for the charging member) that applies a charging voltage to the charging member 14. The power supply 28 is electrically connected to the charging member 14.

Examples of the charging member 14 of the charging device 15 include a contact type charger using a conductive charging roller, a charging brush, a charging film, a charging rubber blade, a charging tube, or the like. In addition, examples of the charging member 14 also include a known charger such as a non-contact type roller charger, and a scorotron charger or a corotron charger using corona discharge.

### <Electrostatic Charge Image Forming Device>

The electrostatic charge image forming device 16 forms an electrostatic charge image on the charged surface of the photoreceptor 12. Specifically, for example, the electrostatic charge image forming device 16 irradiates the surface of the photoreceptor 12 charged by the charging member 14 with light L modulated based on image information of an image to be formed, so that an electrostatic charge image according to the image of image information is formed on the photoreceptor 12.

Examples of the electrostatic charge image forming device 16 include an optical system device that includes a light source imagewise exposing the surface of the electrophotographic photoreceptor to light, such as a semiconductor laser beam, LED light, and liquid crystal shutter light.

### <Developing Device>

The developing device 18 is provided, for example, on the downstream side of the photoreceptor 12 in a rotation direction with respect to an irradiation position of the light L using the electrostatic charge image forming device 16. An accommodating portion that accommodates a developer is provided in the developing device 18. A developer that contains a toner containing toner particles and an external additive is accommodated in the accommodating portion. The toner is accommodated, for example, in a charged state in the developing device 18.

The developing device 18 includes, for example, a developing member 18A that develops the electrostatic charge image formed on the surface of the photoreceptor 12 with the developer that contains the toner containing toner particles and an external additive, and a power supply 32 that applies a developing voltage to the developing member 18A. The developing member 18A is electrically connected to, for example, the power supply 32.

The developing member 18A of the developing device 18 is selected depending on the kind of the developer, and examples thereof include a developing roll having a developing sleeve with a built-in magnet.

The developing device 18 (including the power supply 32) is, for example, electrically connected to the control device 36 provided in the image forming apparatus 10, is driven and controlled by the control device 36, and applies a developing voltage to the developing member 18A. The developing member 18A to which the developing voltage has been applied is charged with a developing potential according to the developing voltage. The developing member 18A charged with the developing potential, for example, holds the developer accommodated in the developing device 18 on the surface and supplies the toner contained in the developer to the surface of the photoreceptor 12 from the inside of the developing device 18. The formed electrostatic charge image is developed as a toner image on the surface of the photoreceptor 12 to which the toner has been supplied.

### <Transfer Device>

The transfer device 31 is provided, for example, on the downstream side of the photoreceptor 12 in the rotation direction with respect to the position where the developing member 18A is disposed. The transfer device 31 includes, for example, a transfer member 20 that transfers the toner image formed on the surface of the photoreceptor 12 to a recording medium 30A and a power supply 30 that applies a transfer voltage to the transfer member 20. The transfer member 20 has, for example, a columnar shape and transports the recording medium 30A in a state of being sandwiched between the photoreceptor 12 and the transfer member 20. The transfer member 20 is, for example, electrically connected to the power supply 30.

Examples of the transfer member 20 include a contact type transfer charger using a belt, a roller, a film, or a rubber cleaning blade and a known non-contact type transfer charger such as a scorotron transfer charger and a corotron transfer charger using corona discharge.

The transfer device 31 (including the power supply 30) is, for example, electrically connected to the control device 36 provided in the image forming apparatus 10, is driven and controlled by the control device 36, and applies a transfer voltage to the transfer member 20. The transfer member 20 to which the transfer voltage has been applied is charged with a transfer potential according to the transfer voltage.

In a case where a transfer voltage having a polarity opposite to a polarity of the toner constituting the toner image formed on the photoreceptor 12 is applied to the transfer member 20 from the power supply 30 of the transfer member 20, a transfer electric field with an electric field intensity for moving each toner constituting the toner image on the photoreceptor 12 to the transfer member 20 side from the photoreceptor 12 using an electrostatic force is formed, for example, in a region where the photoreceptor 12 and the transfer member 20 face each other (see a transfer region 32A in FIG. 1).

The recording medium 30A is, for example, accommodated in an accommodating portion (not shown), is transported from the accommodating portion along a transport path 34 by a plurality of transporting members (not shown), and reaches the transfer region 32A that is the region where the photoreceptor 12 and the transfer member 20 face each other. In the example shown in FIG. 1, the recording medium 30A is transported in a direction indicated by an arrow B. In the recording medium 30A that has reached the transfer region 32A, for example, the toner image on the photoreceptor 12 is transferred by the transfer electric field formed in the region by application of the transfer voltage to the transfer member 20. That is, for example, the toner image is transferred onto the recording medium 30A by the movement of the toner from the surface of the photoreceptor 12 to the recording medium 30A. The toner image on the photoreceptor 12 is transferred onto the recording medium 30A by the transfer electric field.

### <Cleaning Device>

The cleaning device 22 includes a cleaning blade 22A that comes into contact with the surface of the photoreceptor 12 and cleans the surface of the photoreceptor 12.

The cleaning device 22 is provided on the downstream side of the photoreceptor 12 in the rotation direction with respect to the transfer region 32A. The cleaning device 22 cleans residual toner particles adhering to the photoreceptor 12 after the toner image is transferred to the recording medium 30A. The cleaning device 22 also cleans an adhesion substance such as paper dust in addition to the residual toner particles.

The cleaning device 22 includes the cleaning blade 22A and brings the tip of the cleaning blade 22A into contact with the photoreceptor 12 in a direction facing the rotation direction to remove the adhesion substance (including the residual toner particles) on the surface of the photoreceptor 12.

### (Cleaning Blade)

The cleaning blade 22A will be described. However, the reference numerals will not be provided.

The cleaning blade may be configured with a single layer, two layers, or three or more layers, or may have other configurations.

Examples of the cleaning blade having a single-layered configuration include a cleaning blade consisting of a contact member, that is configured such that the entire cleaning blade including the contact portion with the photoreceptor is formed of a single material.

Examples of the cleaning blade having a two-layered configuration includes a cleaning blade provided with a first layer that is a contact member entirely made of a single material, including the contact portion with the photoreceptor, and a second layer that serves as a back surface layer formed on a back surface side of the first layer and consists of a material different from the material of a contact member.

Examples of the cleaning blade having a configuration of three or more layers include a cleaning blade having another layer between the first layer and the second layer in the above-described cleaning blade having a two-layered configuration.

The cleaning blade is used, for example, by being bonded to a rigid plate-like support material.

### (Contact Member)

The contact member is a member including the contact portion that comes into contact with the photoreceptor.

The contact member is made of, for example, a rubber elastic body. Examples of the rubber elastic member include polyurethane rubber, polyimide rubber, silicone rubber, fluororubber, propylene rubber, and butadiene rubber.

However, from the viewpoint of excellent abrasion resistance and mechanical strength, the contact member is, for example, preferably a member made of a rubber elastic body including urethane rubber.

### -Polyurethane Rubber-

The polyurethane rubber is polyurethane rubber obtained by polymerizing at least a polyol component and a polyisocyanate component. In addition to the polyol component, the polyurethane rubber may be, as necessary, polyurethane rubber obtained by polymerizing a resin having a functional group capable of reacting with an isocyanate group of polyisocyanate.

For example, the polyurethane rubber preferably includes a hard segment and a soft segment. The term "hard segment" denotes a segment in which, among polyurethane rubber materials, a material constituting the hard segment is relatively harder than a material constituting the soft segment; and the term "soft segment" denotes a segment in which, among polyurethane rubber materials, a material constituting the soft segment is relatively softer than a material constituting the hard segment.

Examples of the material constituting the hard segment (hard segment material) include a low-molecular-weight polyol component as the polyol component, and the resin having a functional group capable of reacting with an isocyanate group of polyisocyanate. On the other hand, examples of the material constituting the soft segment (soft segment material) include a high-molecular-weight polyol component as the polyol component.

Here, an average particle diameter of aggregates of the hard segment is, for example, preferably 1 µm or more and 10 µm or less, and more preferably 1 µm or more and 5 µm or less.

In a case where the average particle diameter of the aggregates of the hard segment is 1 µm or more, frictional resistance of the surface of the contact member is likely to be reduced. Therefore, the behavior of the blade is stable, and local wear is likely to be suppressed.

On the other hand, in a case where the average particle diameter of the aggregates of the hard segment is 10 µm or less, the occurrence of chipping is likely to be suppressed.

The average particle diameter of the aggregates of the hard segment is measured as follows. By using a polarizing microscope (BX51-P manufactured by Olympus Corporation), an image is captured at a magnification of 20, and image processing is performed to convert the image into a binary image. For each of 20 cleaning blades, particle sizes (equivalent circle diameters) of aggregates are measured at 5 spots (at each spot, particle sizes of 5 aggregates are measured), and an average particle diameter of the 500 aggregates is calculated.

The binarization of the image is carried out by adjusting threshold values of hue, chroma, and brightness using image processing software OLYMPUS Stream essentials (manufactured by Olympus Corporation) such that the color of the aggregates in the crystal part and the hard segment is black and the color of the aggregates in the amorphous part (corresponding to the soft segment) is white.

### · Polyol Component

The polyol component includes a high-molecular-weight polyol and a low-molecular-weight polyol.

The high-molecular-weight polyol component is a polyol having a number-average molecular weight of 500 or more (for example, preferably 500 or more and 5,000 or less). Examples of the high-molecular-weight polyol component include known polyols such as a polyester polyol obtained by dehydration condensation of a low-molecular-weight polyol and a dibasic acid, a polycarbonate polyol obtained by a reaction between a low-molecular-weight polyol and an alkyl carbonate, a polycaprolactone polyol, and a polyether polyol. Examples of a commercially available product of the high-molecular-weight polyol include PLACCEL 205 and PLACCEL 240 manufactured by Daicel Corporation.

Here, the number-average molecular weight is a value measured by a gel permeation chromatography (GPC) method. The same applies hereinafter.

These high-molecular-weight polyols may be used alone or in combination of two or more kinds thereof.

A polymerization ratio of the high-molecular-weight polyol component may be, for example, 30 mol% or more and 50 mol% or less, and preferably 40 mol% or more and 50 mol% or less with respect to the total polymerization component of the polyurethane rubber.

The low-molecular-weight polyol component is a polyol having a molecular weight (number-average molecular weight) of less than 500. The low-molecular-weight polyol is a material that functions as a chain extender and a crosslinking agent.

Examples of the low-molecular-weight polyol component include 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,20-eicosanediol. Among the above, 1,4-butanediol is used as the low-molecular-weight polyol component.

Examples of the low-molecular-weight polyol component include a diol (bifunctional), a triol (trifunctional), and a tetraol (tetrafunctional), that are known as a chain extender and a crosslinking agent.

These polyols may be used alone or in combination of two or more kinds thereof.

A polymerization ratio of the low-molecular-weight polyol component may be, for example, more than 50 mol% and 75 mol% or less, and preferably 52 mol% or more and 75 mol% or less, more preferably 55 mol% or more and 75 mol% or less, and still more preferably 55 mol% or more and 60 mol% or less with respect to the total polymerization component of the polyurethane rubber.

For example, it is preferable to contain, as the low-molecular-weight polyol component, 1,4-butanediol with a proportion of more than 50 mol% and 75 mol% or less (for example, preferably 52 mol% or more and 75 mol% or less, more preferably 55 mol% or more and 75 mol% or less, and still more preferably 55 mol% or more and 60 mol% or less) with respect to all polyol components (high-molecular-weight polyol + low-molecular-weight polyol).

Localized wear is likely to be suppressed by setting the proportion of 1,4-butanediol to more than 50 mol%. On the other hand, by setting the proportion of 1,4-butanediol to 75 mol% or less, occurrence of chipping is likely to be suppressed.

A proportion of 1,4-butanediol in all low-molecular-weight polyol components is 80 mol% or more, for example, preferably 90 mol% or more, and more preferably 100 mol%. That is, for example, using only 1,4-butanediol as the low-molecular-weight polyol component is most preferable.

### · Polyisocyanate Component

Examples of the polyisocyanate component include 4,4'-diphenylmethane diisocyanate (MDI), 2,6-toluene diisocyanate (TDI), 1,6-hexane diisocyanate (HDI), 1,5-naphthalene diisocyanate (NDI), and 3,3'-dimethylbiphenyl-4,4'-diisocyanate (TODI).

As the polyisocyanate component, for example, 4,4'-diphenylmethane diisocyanate (MDI), 1,5-naphthalene diisocyanate (NDI), or hexamethylene diisocyanate (HDI) is more desirable.

These polyisocyanate components may be used alone or in combination of two or more kinds thereof.

A polymerization ratio of the polyisocyanate component may be, for example, 5 mol% or more and 25 mol% or less, and preferably 10 mol% or more and 20 mol% or less with respect to the total polymerization component of the polyurethane rubber.

### · Resin Having Functional Group Capable of Reacting with Isocyanate Group

As the resin having a functional group capable of reacting with an isocyanate group (hereinafter, referred to as "functional group-containing resin"), for example, a resin having flexibility is desirable, and an aliphatic resin having a linear structure is more desirable from the viewpoint of flexibility. Specific examples of the functional group-containing resin include an acrylic resin having two or more hydroxyl groups, a polybutadiene resin having two or more hydroxyl groups, and an epoxy resin having two or more epoxy groups.

Examples of a commercially available product of the acrylic resin having two or more hydroxyl groups include ACTFLOW (grades: UMB-2005B, UMB-2005P, UMB-2005, UME-2005, and the like) manufactured by Soken Chemical & Engineering Co., Ltd.

Examples of a commercially available product of the polybutadiene resin having two or more hydroxyl groups include R-45HT manufactured by Idemitsu Kosan Co., Ltd.

As the epoxy resin having two or more epoxy groups, for example, it is desirable to use an epoxy resin that is not hard and brittle just as the general epoxy resins of the related art and is more flexible and tougher than the epoxy resins of the related art. As the above-described epoxy resin, in view of molecular structure, for example, an epoxy resin that has a structure (flexible skeleton) capable of improving mobility of a main chain in a main chain structure thereof is suitable, and examples of the flexible skeleton include an alkylene skeleton, a cycloalkane skeleton, and a polyoxyalkylene skeleton. Among the above, for example, a polyoxyalkylene skeleton is particularly suitable.

In addition, in view of physical properties, compared to the epoxy resins of the related art, for example, an epoxy resin having a low viscosity relative to the molecular weight is suitable. Specifically, for example, it is desirable that a weight-average molecular weight is in a range of 900 ± 100 and a viscosity at 25°C is in a range of 15000 ± 5000 mPa·s, more desirably in a range of 15000 ± 3000 mPa·s. Examples of a commercially available product of the epoxy resin having the above-described characteristics include EPICLON EXA-4850-150 manufactured by DIC Corporation.

A polymerization ratio of the functional group-containing resin may be, for example, within a range not impairing suitable physical properties of the cleaning blade.

### · Method of Producing Polyurethane Rubber And Method of Molding Contact Member

In production of the polyurethane rubber, a general production method of polyurethane, such as a prepolymer method and a one-shot method, is used. From the viewpoint of obtaining polyurethane having excellent abrasion resistance and excellent chipping resistance, for excellent, a prepolymer method is suitable for the present exemplary embodiment, but the manufacturing method is not limited thereto.

The contact member (or the cleaning blade having a single-layer structure) is produced by molding a composition for forming a cleaning blade, containing a prepolymer of polyurethane rubber or the like, into a sheet shape using, for example, centrifugal molding or extrusion molding and performing cutting processing or the like as necessary.

Examples of a catalyst used for producing the polyurethane rubber include an amine-based compound such as a tertiary amine, a quaternary ammonium salt, and an organometallic compound such as an organic tin compound.

Examples of the tertiary amine include trialkylamine such as triethylamine; tetraalkyl diamine such as N,N,N',N'-tetramethyl-1,3-butanediamine; aminoalcohol such as dimethylethanolamine; esteramine such as ethoxylated amine, ethoxylated diamine, and bis(diethylethanolamine)adipate; a cyclohexylamine derivative such as triethylenediamine (TEDA) and N,N-dimethylcyclohexylamine; a morpholine derivative such as N-methylmorpholine and N-(2-hydroxypropyl)-dimethylmorpholine; and a piperazine derivative such as N,N'-diethyl-2-methylpiperazine and N,N'-bis-(2-hydroxypropyl)-2-methylpiperazine.

Examples of the quaternary ammonium salt include 2-hydroxypropyltrimethylammonium octylate, 1,5-diazabicyclo[4.3.0]nonene-5 (DBN) octylate, 1,8-diazabicyclo[5.4.0]undecene-7 (DBU)-octylate, DBU-oleate, DBU-p-toluenesulfonate, DBU-formate, and 2-hydroxypropyltrimethylammonium formate.

Examples of the organic tin compound include a dialkyltin compound such as dibutyltin dilaurate and dibutyltin di(2-ethylhexoate), stannous 2-ethylcaproate, and stannous oleate.

Among these catalysts, in view of hydrolysis resistance, triethylenediamine (TEDA) that is a tertiary ammonium salt is used, and in view of processability, a quaternary ammonium salt is used. Among the quaternary ammonium salts, 1,5-diazabicyclo[4.3.0]nonene-5 (DBN) octylate, 1,8-diazabicyclo[5.4.0]undecene-7 (DBU)-octylate, or DBU-formate, that has high reaction activity, is used.

A content of the catalyst is, for example, preferably in a range of 0.0005% by mass or more and 0.03% by mass or less and particularly preferably 0.001% by mass or more and 0.01% by mass or less of the entire polyurethane rubber constituting the contact member.

The catalysts may be used alone or in combination of two or more kinds thereof.

### (Impregnated Cured Layer)

The contact portion (that is, the blade tip portion) of the cleaning blade with the surface of the photoreceptor has an impregnated cured layer of a composition that contains an isocyanate compound and at least one polymer selected from the group consisting of a fluorine-based polymer and a silicone-based polymer.

The impregnated cured layer is formed in a region from the surface of the blade tip portion to a depth of 100 µm.

The impregnated treatment layer is a layer in which the above-described components are cured by impregnating the blade tip portion with a surface treatment liquid containing, as the above-described composition, the above-described components and an organic solvent.

The impregnated treatment layer is formed integrally with the surface layer of the blade tip portion so as to be gradually sparse from the surface toward the inside.

### -Isocyanate Compound-

Examples of the isocyanate compound include 2,6-tolylene diisocyanate (TDI), 4,4'-diphenylmethane diisocyanate (MDI), paraphenylenediisocyanate (PPDI), 1,5-naphthalene diisocyanate (NDI), 3,3'-dimethyldiphenyl-4,4'-diisocyanate (TODI), and multimers and modified products thereof. Examples of the modified product of the isocyanate compound include a urethane prepolymer in which an isocyanate compound is pre-polymerized together with a polyol.

### -Fluorine-based Polymer-

The fluorine-based polymer is a polymer having a fluorine atom. The fluorine-based polymer is, for example, preferably a polymer that is chemically bonded by reacting with an isocyanate compound.

Specific examples of the fluorine-based polymer include block copolymers of a (meth)acrylic acid alkyl ester and a (meth)acrylic acid fluorinated alkyl ester, and derivatives thereof.

From the viewpoint of solubility in an organic solvent, the fluorine-based polymer is, for example, preferably a polymer having a hydroxyl group, an alkyl group, or a carboxyl group.

### -Silicone-based Polymer-

The silicone-based polymer is a polymer having a silicon atom, and for example, is preferable a polymer having a siloxane bond. The silicone-based polymer is, for example, preferably a polymer that is chemically bonded by reacting with an isocyanate compound.

Specific examples of the silicone-based polymer include block copolymers of a (meth)acrylic acid alkyl ester and a (meth)acrylic acid siloxane ester ((meth)acrylic resins having polydimethylsiloxane in a side chain, and the like), and derivatives thereof.

From the viewpoint of solubility in an organic solvent, the silicone-based polymer is, for example, preferably a polymer having a hydroxyl group, an alkyl group, or a carboxyl group.

Examples of a method of confirming that the blade tip portion (the surface layer thereof) has the impregnated cured layer include a method of confirming the presence of the impregnated cured layer by estimating a structure of the surface layer material of the blade tip portion or performing composition analysis by an analysis method such as Fourier transform infrared spectrophotometry (FTIR) and X-ray photoelectron spectroscopy (XPS).

The total amount of the fluorine-based polymer and the silicone-based polymer in the surface treatment liquid is, for example, preferably 8 parts by mass or more and 13 parts by mass or less, more preferably 9 parts by mass or more and 13 parts by mass or less, and still more preferably 10 parts by mass or more and 13 parts by mass or less with respect to 100 parts by mass of the isocyanate compound.

The organic solvent is, for example, preferably a solvent that dissolves the fluorine-based polymer and the silicone-based polymer are dissolved and are compatible with the isocyanate compound; and specific examples thereof include ethyl acetate, methyl ethyl ketone (MEK), toluene, acetone, and cyclohexanone. In addition, as the organic solvent, a reactive diluent such as 2-hydroxyethyl acrylate, tetrahydrofurfuryl acrylate, 2-hydroxyethyl methacrylate, hydroxypropyl methacrylate, glycidyl methacrylate, neopentyl glycol diacrylate, hexanediol diacrylate, and trimethylolpropane triacrylate may be used.

The impregnated cured layer is, for example, particularly preferably an impregnated cured layer of an isocyanate compound and a silicone-based polymer. In a case where the impregnated cured layer is adopted, even in both repeated image formation at a low image density under a high-temperature and high-humidity environment and repeated image formation at a high image density under a low-temperature and low-humidity environment, it is possible to further achieve favorable cleaning performance while simultaneously reducing wear of the electrophotographic photoreceptor.

The impregnated cured layer is formed, for example, by impregnating and coating at least the blade tip portion with the impregnation treatment liquid, removing the organic solvent by drying, and forming a cured layer by a heat treatment.

The impregnation treatment is not particularly limited, and for example, a general coating method such as a blade coating method, a wire bar coating method, a spray coating method, a dip coating method, a bead coating method, an air knife coating method, and a curtain coating method can be adopted. In a case where the impregnation treatment is performed by the dip coating method, the dipping time is, for example, in a range of 10 seconds or longer and 60 seconds or shorter.

Examples of the drying conditions after the impregnation treatment include a temperature of 20°C or higher and 30°C or lower and a time of 1 minute or longer and 10 minutes or shorter. The heat treatment may be performed, for example, under conditions of a temperature of 50°C or higher and 80°C or lower for 60 minutes or longer and 90 minutes or shorter.

### (F Amount and Si Amount of Blade Tip Portion)

### -Surface Layer Proportion of F and Si-

A proportion of the total amount B of F and Si present within 200 nm from the surface of the contact portion of the cleaning blade with the electrophotographic photoreceptor to the total amount A of F and Si present within 5 µm from the surface of the contact portion of the cleaning blade with the electrophotographic photoreceptor is, for example, preferably 75% or more, more preferably 85% or more and 95% or less, and still more preferably 90% or more and 93% or less.

In a case where the proportion of the total amount B of F and Si to the total amount A of F and Si is 75% or more, even in a case where an image having a low image density is repeatedly formed in a high-temperature and high-humidity environment, the blade tip portion is appropriately reduced in friction, and the curling of the blade and the wear of the blade are suppressed. As a result, even in both repeated image formation at a low image density under a high-temperature and high-humidity environment and repeated image formation at a high image density under a low-temperature and low-humidity environment, it is possible to further achieve favorable cleaning performance while simultaneously reducing wear of the electrophotographic photoreceptor.

On the other hand, from the viewpoint of suppressing the decrease in cleaning performance due to the decrease in surface pressure of the blade tip portion on the photoreceptor by the insufficient retraction amount of the blade tip portion, the proportion of the total amount B of F and Si to the total amount A of F and Si is, for example, preferably 95% or less.

Here, from the viewpoint of further achieving the improvement of the cleaning performance and the reduction in wear of the electrophotographic photoreceptor even in both repeated image formation at a low image density under a high-temperature and high-humidity environment and repeated image formation at a high image density under a low-temperature and low-humidity environment, the total amount A of F and Si is, for example, preferably 300 atm%·nm or more and 410 atm%·nm or less, and more preferably 350 atm%·nm or more and 370 atm%·nm or less.

### -Total Amount of F and Si on Surface-

The total amount C of F and Si present on the surface of the contact portion of the cleaning blade with the electrophotographic photoreceptor is, for example, preferably 15 atm% or more, more preferably 18 atm% or more and 25 atm% or less, and still more preferably 20 atm% or more and 22 atm% or less.

In a case where the total amount C of F and Si is 15 atm% or more, the blade tip portion is appropriately reduced in friction, and the curling of the blade and the wear of the blade are suppressed. As a result, even in both repeated image formation at a low image density under a high-temperature and high-humidity environment and repeated image formation at a high image density under a low-temperature and low-humidity environment, it is possible to further achieve favorable cleaning performance while simultaneously reducing wear of the electrophotographic photoreceptor.

On the other hand, from the viewpoint of suppressing the decrease in cleaning performance due to the decrease in surface pressure of the blade tip portion on the photoreceptor by the insufficient retraction amount of the blade tip portion, the total amount C of F and Si is, for example, preferably 25 atm% or less.

### -Total Amount of F and Si at 50 nm Position-

The total amount D of F and Si present at a position of 50 nm from the surface of the contact portion of the cleaning blade with the electrophotographic photoreceptor is, for example, preferably 0.3 atm% or more, more preferably 0.5 atm% or more and 7.0 atm% or less, and still more preferably 1.0 atm% or more and 2.0 atm% or less.

In a case where the total amount D of F and Si is 0.3 atm% or more, the blade tip portion is appropriately reduced in friction over time, and the curling of the blade and the wear of the blade are suppressed. As a result, even in both repeated image formation at a low image density under a high-temperature and high-humidity environment and repeated image formation at a high image density under a low-temperature and low-humidity environment, it is possible to achieve favorable cleaning performance over time while simultaneously reducing wear of the electrophotographic photoreceptor.

On the other hand, from the viewpoint of suppressing the decrease in cleaning performance over time due to the decrease in surface pressure of the blade tip portion on the photoreceptor by the insufficient retraction amount of the blade tip portion, the total amount D of F and Si is, for example, preferably 7.0 atm% or less.

### -Method of Measuring F Amount and Si Amount of Blade Tip Portion-

A method of measuring the total amounts A to D of F and Si in the contact portion of the cleaning blade with the electrophotographic photoreceptor is as follows. That is, an analysis method of the F element amount and the Si element amount in the depth direction from the surface of the blade tip portion is as follows.

A region including the surface of the blade tip portion (that is, the surface of the contact portion of the blade with the photoreceptor) is cut out to obtain a sample.

X-ray photoelectron spectroscopy (XPS) is performed on the sample while etching the sample under the following conditions from a surface corresponding to the surface of the blade tip portion in the depth direction. Elements to be analyzed are N, C, O, F, and Si. Profiles of the F amount and the Si amount in the depth direction are obtained.

In addition, the surface layer proportion of F and Si in the cleaning blade (the proportion of the total amount B of F and Si to the total amount A of F and Si) is obtained by setting the area up to a depth of 5 µm as SA and the area up to a depth of 200 nm as SB in the plot of the depth from the contact portion of the cleaning blade and the element ratio, that is obtained by the analysis in the depth direction described above, and calculating the ratio from the expression of "SB/SA × 100".

### -Conditions for XPS-

· XPS device: JPS-9030 (XPS manufactured by JEOL Ltd.)
· X-ray type: MgKα
· Acceleration voltage: 10 kV
· Emission current: 10 mA
· Measurement step: 0.1 eV
· Pass energy: 10 eV
· Dwell Time: 100 to 500 ms
· Etching gas: argon
· Ion gun acceleration voltage: 500 V
· Etching rate: 30 nm/min (in terms of SiO₂)

In the profiles of the F amount and the Si amount in the depth direction, the total amount of the F amount and the Si amount within 5 µm from the surface of the blade tip portion is defined as the total amount A of F and Si.

In the profiles of the F amount and the Si amount in the depth direction, the total amount of the F amount and the Si amount within 200 nm from the surface of the blade tip portion is determined as the total amount B of F and Si.

In the profiles of the F amount and the Si amount in the depth direction, the total amount of the F amount and the Si amount at a position of 0 nm from the surface of the blade tip portion is determined as the total amount C of F and Si.

In the profiles of the F amount and the Si amount in the depth direction, the total amount of the F amount and the Si amount at a position of 50 nm from the surface of the blade tip portion is determined as the total amount D of F and Si.

The total amounts A to D of F and Si are adjusted according to the component formulation of the above-described impregnated and cured layer and the treatment time (for example, the dipping time) of the impregnation treatment liquid for forming the impregnated cured layer.

### (100% Modulus of Blade Tip Portion)

A 100% modulus (hereinafter, "M100") of the surface of the contact portion of the cleaning blade with the electrophotographic photoreceptor at 23°C is, for example, preferably 5 MPa or more and 23 MPa or less, more preferably 10 MPa or more and 20 MPa or less, and still more preferably 13 MPa or more and 18 MPa or less.

Hereinafter, the 100% modulus in the contact portion of the cleaning blade at 23°C is also referred to as "M100".

In a case where the M100 in the blade tip portion is less than 13 MPa, the rigidity of the blade tip portion is ensured, and the curling of the blade and the wear of the blade are suppressed.

In a case where the M100 in the blade tip portion is 23 MPa or less, rigidity of the blade tip portion is suppressed from being excessive, a retraction amount of the blade tip portion is secured, and thus the cleaning performance is secured.

As a result, even in both repeated image formation at a low image density under a high-temperature and high-humidity environment and repeated image formation at a high image density under a low-temperature and low-humidity environment, it is possible to further achieve favorable cleaning performance while simultaneously reducing wear of the electrophotographic photoreceptor.

The M100 in the blade tip portion is measured by the following method.

A dumbbell-shaped No. 3 test piece is collected from the blade tip portion to be measured.

The M100 is a value obtained from a stress at 100% strain, that is measured at 23°C using a dumbbell-shaped No. 3 test piece in accordance with JIS K 6251 (2010) at a tensile speed of 500 mm/min. For example, Strograph AE Elastomer (manufactured by Toyo Seiki-Seisaku-syo, Ltd.) is used as a measuring device.

Examples of a method of adjusting the M100 in the blade tip portion to be in the above-described range include a method of adjusting the formulation in the blade tip portion. Specific examples thereof include a method of adjusting a content of a polyisocyanate component in a case where the contact member including the blade tip portion (that is, the above-described contact portion) contains a polyurethane rubber, a method of adjusting at least one of the type or the amount of a crosslinking agent in a case where a crosslinking agent is used for manufacturing the contact member, and a combination thereof. The M100 increases as the content of the polyisocyanate component increases.

### <Discharging Device>

The discharging device 24 is provided, for example, on the downstream side of the photoreceptor 12 in the rotation direction with respect to the cleaning device 22. The discharging device 24 exposes the surface of the photoreceptor 12 to discharge the surface after the toner image is transferred. Specifically, for example, the discharging device 24 is electrically connected to the control device 36 provided in the image forming apparatus 10 and is driven and controlled by the control device 36 to expose all surfaces of the photoreceptor 12 (specifically, for example, the entire surface of the image forming region) so that the surfaces are discharged.

Examples of the discharging device 24 include a device having a light source such as a tungsten lamp that irradiates white light and a device having a light source such as a light emitting diode (LED) that irradiates red light.

### <Fixing Device>

The fixing device 26 is provided, for example, on a downstream side of the transport path 34 of the recording medium 30A in the transport direction with respect to the transfer region 32A. The fixing device 26 has a fixing member 26A and a pressure member 26B disposed in contact with the fixing member 26A and fixes the toner image transferred onto the recording medium 30A at a contact portion between the fixing member 26A and the pressure member 26B. Specifically, for example, the fixing device 26 is electrically connected to the control device 36 provided in the image forming apparatus 10, is driven and controlled by the control device 36, and fixes the toner image transferred onto the recording medium 30A to the recording medium 30A by heat and pressure.

Examples of the fixing device 26 include a known fixing device, such as a heat roller fixing device and an oven fixing device.

Specifically, for example, a known fixing device including a fixing roll or a fixing belt as the fixing member 26A and a pressure roll or a pressure belt as the pressure member 26B is employed as the fixing device 26.

Here, the recording medium 30A transported along the transport path 34 and to which the toner image is transferred by passing through a region (transfer region 32A) where the photoreceptor 12 and the transfer member 20 face each other reaches, for example, the installation position of the fixing device 26 along the transport path 34 by the transporting member (not shown) so that the toner image is fixed onto the recording medium 30A.

The recording medium 30A in which the image is formed by fixing the toner image is discharged to the outside of the image forming apparatus 10 by a plurality of transporting members (not shown). The photoreceptor 12 is charged with a charging potential by the charging device 15 again after the discharging by the discharging device 24.

### <Operation of Image Forming Apparatus>

An example of the operation of the image forming apparatus 10 according to the present exemplary embodiment will be described. Various operations of the image forming apparatus 10 are performed by a control program executed by the control device 36.

The image forming operation of the image forming apparatus 10 will be described.

First, the surface of the photoreceptor 12 is charged by the charging device 15. The electrostatic charge image forming device 16 exposes the charged surface of the photoreceptor 12 based on image information. In this manner, an electrostatic charge image according to the image information is formed on the photoreceptor 12. In the developing device 18, the electrostatic charge image formed on the surface of the photoreceptor 12 is developed by a developer containing a toner. In this manner, a toner image is formed on the surface of the photoreceptor 12.

In the transfer device 31, the toner image formed on the surface of the photoreceptor 12 is transferred to the recording medium 30A. The toner image transferred to the recording medium 30A is fixed by the fixing device 26.

On the other hand, the surface of the photoreceptor 12 after the transfer of the toner image is cleaned by the cleaning blade 22A in the cleaning device 22, and then the surface is discharged by the discharging device 24.

The configuration of the image forming apparatus described in the present exemplary embodiment is an example, and it goes without saying that the configuration may be changed within a range not departing from the gist of the present exemplary embodiment.

### Examples

Hereinafter, exemplary embodiments of the present invention will be specifically described based on Examples. However, the exemplary embodiments of the present invention are not limited to Examples. In the following description, unless otherwise specified, "parts" and "%" are based on mass.

In the following description, the synthesis, the treatment, the production, and the like are carried out at room temperature (25°C ± 3°C) unless otherwise specified.

### <Production of Photoreceptor>

### [Production of Photoreceptor (1) Including Lamination-type Photosensitive Layer]

### (Formation of Undercoat Layer (1))

An aluminum cylindrical tube having an outer diameter of 30 mm, a length of 250 mm, and a thickness of 1 mm is prepared as a conductive substrate.

100 parts of zinc oxide (average particle size: 70 nm, specific surface area: 15 m²/g, manufactured by Tayca Corporation) is stirred and mixed with 500 parts of toluene, 1.3 parts of a silane coupling agent (trade name: KBM-603, manufactured by Shin-Etsu Chemical Co., Ltd., N-2-(aminoethyl)-3-aminopropyltrimethoxysilane) is added thereto, and the mixture is stirred for 2 hours. Thereafter, the toluene is distilled off under reduced pressure and baked at 120°C for 3 hours to obtain zinc oxide subjected to a surface treatment with the silane coupling agent.

110 parts of the surface-treated zinc oxide is stirred and mixed with 500 parts of tetrahydrofuran, a solution obtained by dissolving 0.6 parts of alizarin in 50 parts of tetrahydrofuran is added thereto, and the mixture is stirred at 50°C for 5 hours. Thereafter, the solid content is separated by filtration by carrying out filtration under reduced pressure, and dried at 60°C under reduced pressure, thereby obtaining zinc oxide with alizarin.

100 parts of a solution obtained by dissolving 60 parts of the zinc oxide with alizarin, 13.5 parts of a curing agent (blocked isocyanate, trade name: SUMIDUR 3175, manufactured by Sumika Covestro Urethane Co., Ltd.), and 15 parts of a butyral resin (trade name: S-LEC BM-1, manufactured by Sekisui Chemical Co., Ltd.) in 68 parts of methyl ethyl ketone is mixed with 5 parts of methyl ethyl ketone, and the mixture is dispersed in a sand mill for 2 hours using glass beads having 1 mmφ, thereby obtaining a dispersion liquid. 0.005 parts of dioctyl tin dilaurate as a catalyst and 4 parts of silicone resin particles (trade name: TOSPEARL 145, manufactured by Momentive Performance Materials Inc.) are added to the dispersion liquid to obtain a coating solution for forming an undercoat layer. The outer peripheral surface of the conductive substrate is coated with the coating solution for forming an undercoat layer by a dip coating method, and dried and cured at 170°C for 40 minutes to form an undercoat layer (1) with an average thickness of 24 µm.

### (Formation of Charge Generation Layer (1))

A mixture of 15 parts of hydroxygallium phthalocyanine as a charge generation material (having diffraction peaks at positions where Bragg angles (2θ ± 0.2°) in the X-ray diffraction spectrum using Cukα characteristic X-rays are at least of 7.5°, 9.9°, 12.5, 16.3°, 18.6°, 25.1°, and 28.3°), 10 parts of a vinyl chloride-vinyl acetate copolymer resin (trade name: VMCH, manufactured by Nippon Unicar Company Limited) as a binder resin, and 200 parts of n-butyl acetate is dispersed in a sand mill for 4 hours using glass beads with a diameter of 1 mm. 175 parts of n-butyl acetate and 180 parts of methyl ethyl ketone are added to the dispersion, and the mixture is stirred to obtain a coating solution for forming a charge generation layer. The undercoat layer (1) is dipped in and coated with the coating solution for forming a charge generation layer, and dried at room temperature (25°C ± 3°C) to form a charge generation layer (1) having an average thickness of 0.18 µm.

### (Formation of Charge Transport Layer (1))

60 parts of a polyester resin having a dicarboxylic acid unit A2-3 (50 mol) and a diol unit B1-4 (50 mol) as a binder resin and 40 parts of CTM-1 as a charge transport material are dissolved in 270 parts of tetrahydrofuran and 30 parts of toluene, thereby obtaining a coating solution for forming a charge transport layer. The charge generation layer is dipped and coated with the coating solution for forming a charge transport layer, and dried at 145°C for 30 minutes to form a charge transport layer (1) having an average thickness of 24 µm.

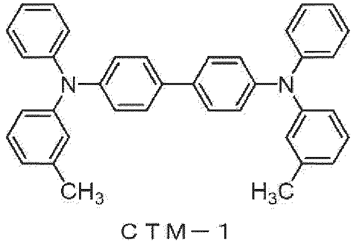

A photoreceptor (1) is obtained through the above-described steps.

### [Production of Photoreceptors (2) to (7) Including Lamination-type Photosensitive Layer]

Photoreceptors (2) to (7) are obtained in the same manner as in the photoreceptor (1), except that, in the formation of the charge transport layer, a polyester resin having a dicarboxylic acid unit and a diol unit shown in Table 1 is used as the binder resin.

### [Production of Photoreceptor (C1) Including Lamination-type Photosensitive Layer]

A photoreceptor (C1) is obtained in the same manner as the photoreceptor (1), except that, in the formation of the charge transport layer, the polyester resin used as the binder resin is changed to the following polycarbonate resin (PC-1: weight-average molecular weight: 45,000).

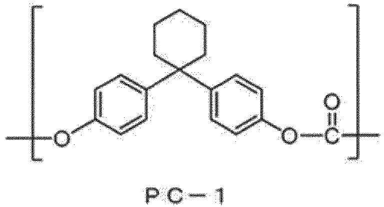

### <Production of Cleaning Blade>

### [Production of Cleaning Blade (1)]

### (Production of Blade Base Material)

100 parts of polycaprolactone polyol (molecular weight: 2,000) and 51 parts of 4,4'-diphenylmethane diisocyanate (MDI, DIC Corporation) are reacted with each other at 115°C for 20 minutes. Next, 6.1 parts of 1,4-butanediol and 2.6 parts of trimethylolpropane are mixed therewith. The mixture is charged into a mold kept at 140°C, and heated and cured for 40 minutes, thereby obtaining urethane rubber (1).

The urethane rubber (1) is cut into a length of 330 mm, a width of 13.5 mm, and a thickness of 1.9 mm, thereby obtaining a urethane rubber sheet (1). Two urethane rubber sheets (1) are bonded to each other with an adhesive to obtain a blade base material.

### (Production of Impregnation Treatment Liquid (1))

25 parts of 4,4'-diphenylmethane diisocyanate (MDI, "MILLIONATE MT" of Toray Industries, Inc.), 3 parts of a silicone-modified acrylic polymer (8BS-9000, Taisei Fine Chemical Co., Ltd.) as a polymer component, and 80 parts of ethyl acetate are mixed together in a ball mill for 4 hours, thereby obtaining an impregnation treatment liquid (1).

### (Formation of Impregnated Cured Layer (1))

A liquid temperature of the impregnation treatment liquid (1) is adjusted to 23°C, and the blade base material is dipped in the impregnation treatment liquid (1) for 90 seconds while maintaining the liquid temperature at 23°C. Next, the blade is dried at room temperature for 1 minute, the surface of the blade base material is wiped with a sponge containing a small amount of toluene, and then the blade is left in a constant temperature bath at a temperature of 25°C for 50 minutes to form an impregnated cured layer (1).

Through the above steps, a cleaning blade (1) is obtained.

### [Production of Cleaning Blades (2) to (14), and (C1)]

Cleaning blades (2) to (14), and (C1) are obtained as in the preparation of the impregnation treatment liquid (1), except that the number of parts of 4,4'-diphenylmethane diisocyanate (MDI), the components of the impregnation treatment liquid (the type and the number of parts of the polymer component), and the conditions for forming the impregnated cured layer (that is, the dipping time as the conditions for the impregnation treatment) are changed according to Table 1.

However, in Table 1, the notation of "Si-based polymer" indicates that a silicone-modified acrylic polymer (8BS-9000; manufactured by Taisei Fine Chemical Co., Ltd.) is used as the polymer component, and the notation of "F-based polymer" indicates that a fluorine silicone-modified acrylic polymer (8FS-009; manufactured by Taisei Fine Chemical Co., Ltd.) is used.

Table 1 shows values obtained by measuring the following characteristics of the cleaning blade according to the methods described above.
· Proportion of the total amount B of F and Si present within 200 nm from the surface of the contact portion of the cleaning blade with the electrophotographic photoreceptor to the total amount A of F and Si present within 5 µm from the surface of the contact portion of the cleaning blade with the photoreceptor (referred to as "Surface layer proportion of F + Si")
· Total amount A of F and Si present within 5 µm from the surface of the contact portion with photoreceptor (referred to as "Total amount of F + Si within 5 µm")
· Total amount B of F and Si present within 200 nm from the surface of the contact portion with photoreceptor (referred to as "Total amount of F + Si within 200 nm")
· Total amount C of F and Si present on the surface of the contact portion with the electrophotographic photoreceptor (referred to as "Total amount of F + Si on surface")
· Total amount D of F and Si present at a position of 50 nm from the surface of the contact portion with the photoreceptor (referred to as "Total amount of F + Si at 50 nm position")

### <Examples 1 to 7 and 9 to 11, and Comparative Example 3>

The photoreceptor and cleaning blade shown in Table 1 are mounted on "ApeosPort C-7770" manufactured by FUJIFILM Business Innovation Corp. The corresponding photoreceptor and cleaning blade are produced by the methods described above.

The image forming apparatus obtained is used as an image forming apparatus of Examples 1 to 7 and 9 to 11, and Comparative Example 3.

### <Examples 8 and 12 to 20, and Comparative Examples 1 and 2>

The photoreceptor and cleaning blade shown in Table 1 are mounted on "ApeosPort C-7770" manufactured by FUJIFILM Business Innovation Corp.

The image forming apparatus obtained is used as an image forming apparatus of Examples 8 and 12 to 18, and Comparative Examples 1 and 2.

### <Evaluation 1>

The following evaluations are performed on the image forming apparatuses of Examples 1 to 7 and 9 to 11, and Comparative Example 3.

The image forming apparatus of each example outputs 40,000 sheets of images having an image density of 0.5% on A4 plain paper in a high-temperature and high-humidity environment of a temperature of 28°C and a relative humidity of 80%.

The image forming apparatus of each example outputs 40,000 sheets of images having an image density of 10% on A4 plain paper in a low-temperature and low-humidity environment of a temperature of 10°C and a relative humidity of 15%.

The following evaluations are performed for the image formation under each condition.

### [Wear of Photoreceptor]

The amount of wear of the photoreceptor after the image formation under the above-described conditions is calculated by measuring a film thickness of the photosensitive layer before and after the image formation by a eddy current film thickness meter and calculating the difference as the amount of wear, and is evaluated based on the following standard. The evaluation results are the best in A and the worst in E.

### -Evaluation Standard-

A: amount of wear of the photoreceptor ≤ 0.6 µm
B: 0.6 µm < amount of wear of the photoreceptor ≤ 0.8 µm
C: 0.8 µm < amount of wear of the photoreceptor ≤ 1.0 µm
D: 1.0 µm < amount of wear of the photoreceptor ≤ 1.2 µm
E: 1.2 µm < amount of wear of the photoreceptor

### [Curling of Blade]

The entire width region of the blade during the image formation under the above-described conditions is visually observed and determined according to the following standard.

The evaluation results are the best in A and the worst in C. In addition, it can be said that the closer the evaluation result is to A, the more the occurrence of curling of the cleaning blade is suppressed.

### -Evaluation Standard-

A: curling of the blade is not observed even at 40,000 sheets.
B: curling of the blade is observed in 30,000 sheets or more and less than 40,000 sheets.
C: curling of the blade is observed before 30,000 sheets.

### [Amount of Strain of Blade]

In the image forming apparatus of each example, a strain gauge (KFG-02 manufactured by Kyowa Electronic Instruments Co., Ltd.) is attached with an adhesive at a position 1 mm from the tip of the surface of the cleaning blade on the side of the surface that shrinks in a case of being brought into contact with the photoreceptor. Lead wires of the strain gauge are connected to a strain data collection unit (NR-ST04 manufactured by KEYENCE CORPORATION) and connected to a computer through a data logger (NR-500 manufactured by KEYENCE CORPORATION). The amount of strain of the cleaning blade is detected as an electrical signal by an attached strain gauge.

The amount of strain of the cleaning blade is recorded during the image formation under the above-described conditions. The maximum value and the minimum value of the recorded amount of strain are introduced into the following expression, and a difference Δ in the amount of strain is calculated. Difference Δ in amount of strain = (Maximum value of amount of strain) - (Minimum value of amount of strain)

The difference Δ in the amount of strain is determined according to the following standard. The evaluation results are the best in A and the worst in E. It can be said that the closer the evaluation result is to A, the more stable the behavior of the blade tip portion during the image formation is, and the better the cleaning quality tends to be.

### -Evaluation Standard-

A: difference Δ (µST) in amount of strain < 20
B: 20 ≤ difference Δ (µST) in amount of strain < 30
C: 30 ≤ difference Δ (µST) in amount of strain < 40
D: 40 ≤ difference Δ (µST) in amount of strain < 50
E: 50 ≤ difference Δ (µST) in amount of strain

### [Slipping of External Additive]

The surface of the photoreceptor after the image formation under the above-described conditions is observed with a laser microscope VK-9500 manufactured by KEYENCE CORPORATION, and the phenomenon of external additive filming (a phenomenon in which the external additive itself or the external additive that has been crushed and made fine adheres to the surface of the photoreceptor) is observed, and the situation of slipping of the external additive of the toner is evaluated according to the following standard.

### -Evaluation Standard-

A: no slipping of the external additive has occurred.
B: slight slipping of the external additive has occurred, but is at a completely acceptable level in practical use.
C: slipping of the external additive has occurred, but is at an acceptable level in practical use.
D: slipping of the external additive has occurred, and is at an unacceptable level in practical use.
E: slipping of the external additive has frequently occurred, and is at an unacceptable level in practical use.

### <Evaluation 2>

The same evaluations as in Evaluation 1 are performed on the image forming apparatuses of Examples 8 and 12 to 20, and Comparative Examples 1 and 2.

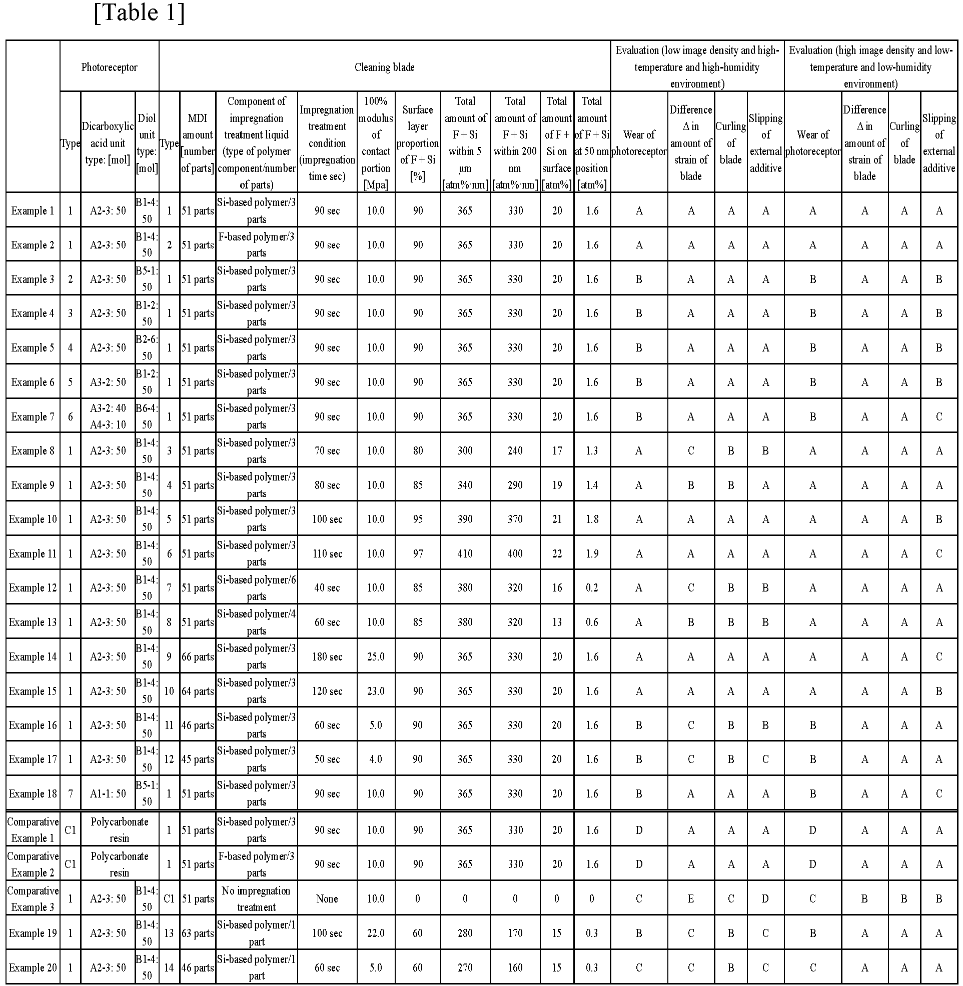

From the above results, it is found that, in the image forming apparatuses of Examples, as compared with the image forming apparatuses of Comparative Examples, the cleaning performance is favorable and the wear of the electrophotographic photoreceptor is reduced even in both repeated image formation at a low image density under a high-temperature and high-humidity environment and repeated image formation at a high image density under a low-temperature and low-humidity environment.

The present exemplary embodiments include the following aspects.
(((1))) An image forming apparatus comprising:
   an electrophotographic photoreceptor that has a photosensitive layer constituting a surface;
   a charging device that charges the surface of the electrophotographic photoreceptor;
   an electrostatic charge image forming device that forms an electrostatic charge image on the charged surface of the electrophotographic photoreceptor;
   a developing device that accommodates a developer and develops the electrostatic charge image formed on the surface of the electrophotographic photoreceptor as a toner image by the developer;
   a transfer device that transfers the toner image formed on the surface of the electrophotographic photoreceptor to a surface of a recording medium; and
   a cleaning device that has a cleaning blade coming into contact with the surface of the electrophotographic photoreceptor and cleaning at least residual toner particles on the surface of the electrophotographic photoreceptor,
   wherein the photosensitive layer in the electrophotographic photoreceptor contains a polyester resin (1) having a dicarboxylic acid unit (A) represented by Formula (A) and a diol unit (B) represented by Formula (B), and
   a contact portion of the cleaning blade with the electrophotographic photoreceptor has an impregnated cured layer of a composition that contains an isocyanate compound and at least one polymer selected from the group consisting of a fluorine-based polymer and a silicone-based polymer,

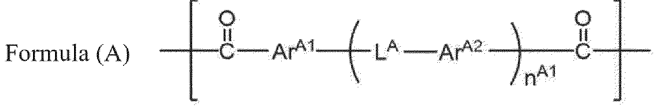

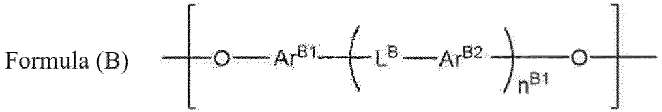

   in Formula (A), Ar^{A1} and Ar^{A2} are each independently an aromatic ring that may have a substituent, L^{A} is a single bond or a divalent linking group, and n^{A1} is 0, 1, or 2,
   in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.
(((2))) The image forming apparatus according to (((1))),
   wherein a proportion of a total amount B of F and Si present within 200 nm from a surface of the contact portion of the cleaning blade with the electrophotographic photoreceptor to a total amount A of F and Si present within 5 µm from the surface of the contact portion of the cleaning blade with the electrophotographic photoreceptor is 75% or more.
(((3))) The image forming apparatus according to (((2))),
   wherein the proportion of the total amount B of F and Si to the total amount A of F and Si is 85% or more and 95% or less.
(((4))) The image forming apparatus according to (((2))) or (((3))),
   wherein a total amount C of F and Si present on the surface of the contact portion of the cleaning blade with the electrophotographic photoreceptor is 15 atm% or more.
(((5))) The image forming apparatus according to any one of (((2))) to (((4))),
   wherein a total amount D of F and Si present at a position of 50 nm from the surface of the contact portion of the cleaning blade with the electrophotographic photoreceptor is 0.3 atm% or more.
(((6))) The image forming apparatus according to any one of (((1))) to (((5))),
   wherein a 100% modulus of the surface of the contact portion of the cleaning blade with the electrophotographic photoreceptor at 23°C is 5 MPa or more and 23 MPa or less.
(((7))) The image forming apparatus according to any one of (((1))) to (((6))),
   wherein the photosensitive layer of the electrophotographic photoreceptor contains, as the polyester resin (1), a polyester resin having a dicarboxylic acid unit represented by (A2) and a diol unit represented by (B 1), 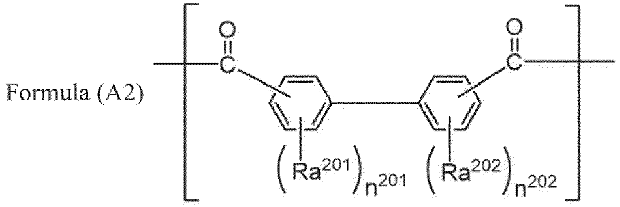 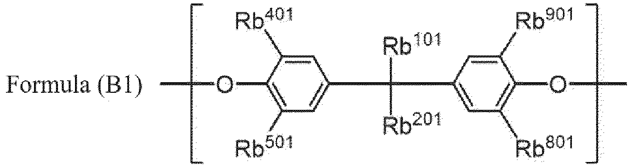
   in Formula (A2), n²⁰¹ and n²⁰² are each independently an integer of 0 or more and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms,
   in Formula (B 1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom.
(((8))) The image forming apparatus according to (((7))),
   wherein the polyester resin having the dicarboxylic acid unit represented by Formula (A2) and the diol unit represented by Formula (B1) is a polyester resin having a dicarboxylic acid unit represented by (A2-3) and a diol unit represented by (B1-4), 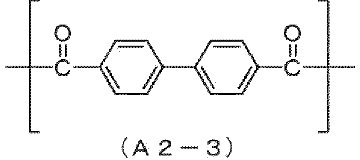 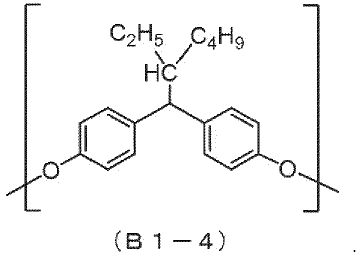
(((9))) A process cartridge that is detachably mounted in an image forming apparatus, the process cartridge comprising:
   an electrophotographic photoreceptor that has a photosensitive layer constituting a surface; and
   a cleaning device that has a cleaning blade coming into contact with the surface of the electrophotographic photoreceptor and cleaning at least residual toner particles on the surface of the electrophotographic photoreceptor,
   wherein the photosensitive layer in the electrophotographic photoreceptor contains a polyester resin (1) having a dicarboxylic acid unit (A) represented by Formula (A) and a diol unit (B) represented by Formula (B), and
   a contact portion of the cleaning blade with the electrophotographic photoreceptor contains an impregnated cured layer of a composition that contains an isocyanate and at least one polymer selected from the group consisting of a fluorine-based polymer and a silicone-based polymer,

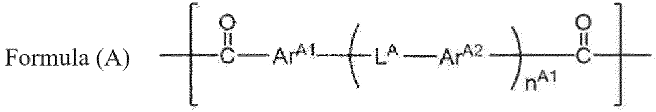

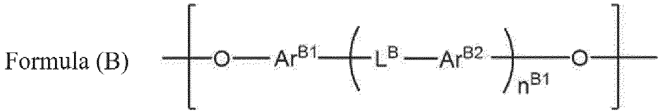

   in Formula (A), Ar^{A1} and Ar^{A2} are each independently an aromatic ring that may have a substituent, L^{A} is a single bond or a divalent linking group, and n^{A1} is 0, 1, or 2,
   in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

The effects of the above-described aspects are as follows.

According to the disclosure of (((1))), there is provided the specific image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the photosensitive layer in the electrophotographic photoreceptor contains only a polycarbonate resin, or a case where a contact portion of the cleaning blade with the electrophotographic photoreceptor does not contain at least one polymer selected from the group consisting of a fluorine-based polymer and a silicone-based polymer.

According to the disclosure of (((2))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the proportion of the total amount B of F and Si present within 200 nm from the surface of the contact portion of the cleaning blade with the electrophotographic photoreceptor to the total amount A of F and Si present within 5 µm from the surface of the contact portion of the cleaning blade with the electrophotographic photoreceptor is less than 75%.

According to the disclosure of (((3))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the proportion of the total amount B of F and Si to the total amount A of F and Si is less than 85% or more than 95%.

According to the disclosure of (((4))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the total amount C of F and Si present on the surface of the contact portion of the cleaning blade with the electrophotographic photoreceptor is less than 15 atm%.

According to the disclosure of (((5))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the total amount D of F and Si present at a position of 50 nm from the surface of the contact portion of the cleaning blade with the electrophotographic photoreceptor is less than 0.3 atm%.

According to the disclosure of (((6))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the 100% modulus of the surface of the contact portion of the cleaning blade with the electrophotographic photoreceptor at 23°C is less than 5 MPa or more than 23 MPa.

According to the disclosure of (((7))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the photosensitive layer of the electrophotographic photoreceptor contains, as the polyester resin (1), a polyester resin having the dicarboxylic acid unit represented by Formula (A1) and the diol unit represented by Formula (B5).

According to the disclosure of (((8))), there is provided an image forming apparatus that has favorable cleaning performance and reduces wear of the electrophotographic photoreceptor even in both repeated image formation at a low image density under a high-temperature and high-humidity environment and repeated image formation at a high image density under a low-temperature and low-humidity environment, as compared with a case where the polyester resin having the dicarboxylic acid unit represented by (A2) and the diol unit represented by (B1) is a polyester resin having a dicarboxylic acid unit represented by (A2-3) and a diol unit represented by (B1-2).

According to the disclosure of (((9))), there is provided a process cartridge including an electrophotographic photoreceptor that has a photosensitive layer constituting a surface and a cleaning device that has a cleaning blade coming into contact with the surface of the electrophotographic photoreceptor and cleaning at least residual toner particles on the surface of the electrophotographic photoreceptor, the process cartridge having favorable cleaning performance and reducing wear of the electrophotographic photoreceptor even in both repeated image formation at a low image density under a high-temperature and high-humidity environment and repeated image formation at a high image density under a low-temperature and low-humidity environment, as compared with a case where the photosensitive layer in the electrophotographic photoreceptor contains only a polycarbonate resin, or a case where a contact portion of the cleaning blade with the electrophotographic photoreceptor does not contain at least one polymer selected from the group consisting of a fluorine-based polymer and a silicone-based polymer.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: conductive substrate
2: undercoat layer
3: charge generation layer
4: charge transport layer
5: photosensitive layer
12A: photoreceptor
12B: photoreceptor

10: image forming apparatus
12: photoreceptor
14: charging member
15: charging device
16: electrostatic charge image forming device
18: developing device
20: transfer member
22: cleaning device
22A: cleaning blade
24: discharging device
26: fixing device
30A: recording medium
31: transfer device
36: control device

## Claims

1. An image forming apparatus comprising:
an electrophotographic photoreceptor that has a photosensitive layer constituting a surface;
a charging device that charges the surface of the electrophotographic photoreceptor;
an electrostatic charge image forming device that forms an electrostatic charge image on the charged surface of the electrophotographic photoreceptor;
a developing device that accommodates a developer and develops the electrostatic charge image formed on the surface of the electrophotographic photoreceptor as a toner image by the developer;
a transfer device that transfers the toner image formed on the surface of the electrophotographic photoreceptor to a surface of a recording medium; and
a cleaning device that has a cleaning blade coming into contact with the surface of the electrophotographic photoreceptor and cleaning at least residual toner particles on the surface of the electrophotographic photoreceptor,
wherein the photosensitive layer in the electrophotographic photoreceptor contains a polyester resin (1) having a dicarboxylic acid unit (A) represented by Formula (A) and a diol unit (B) represented by Formula (B), and
a contact portion of the cleaning blade with the electrophotographic photoreceptor has an impregnated cured layer of a composition that contains an isocyanate compound and at least one polymer selected from the group consisting of a fluorine-based polymer and a silicone-based polymer, 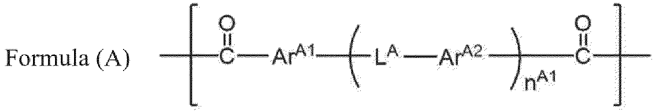 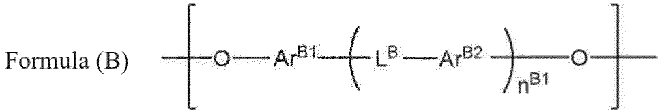
in Formula (A), Ar^{A1} and Ar^{A2} are each independently an aromatic ring that may have a substituent, L^{A} is a single bond or a divalent linking group, and n^{A1} is 0, 1, or 2,
in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.

2. The image forming apparatus according to claim 1,
wherein a proportion of a total amount B of F and Si present within 200 nm from a surface of the contact portion of the cleaning blade with the electrophotographic photoreceptor to a total amount A of F and Si present within 5 µm from the surface of the contact portion of the cleaning blade with the electrophotographic photoreceptor is 75% or more.

3. The image forming apparatus according to claim 2,
wherein the proportion of the total amount B of F and Si to the total amount A of F and Si is 85% or more and 95% or less.

4. The image forming apparatus according to claim 2 or 3,
wherein a total amount C of F and Si present on the surface of the contact portion of the cleaning blade with the electrophotographic photoreceptor is 15 atm% or more.

5. The image forming apparatus according to any one of claims 2 to 4,
wherein a total amount D of F and Si present at a position of 50 nm from the surface of the contact portion of the cleaning blade with the electrophotographic photoreceptor is 0.3 atm% or more.

6. The image forming apparatus according to any one of claims 1 to 5,
wherein a 100% modulus of the surface of the contact portion of the cleaning blade with the electrophotographic photoreceptor at 23°C is 5 MPa or more and 23 MPa or less.

7. The image forming apparatus according to any one of claims 1 to 6,
wherein the photosensitive layer of the electrophotographic photoreceptor contains, as the polyester resin (1), a polyester resin having a dicarboxylic acid unit represented by (A2) and a diol unit represented by (B 1), 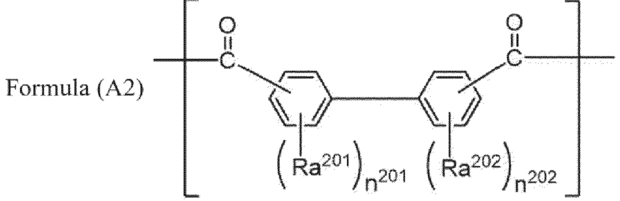 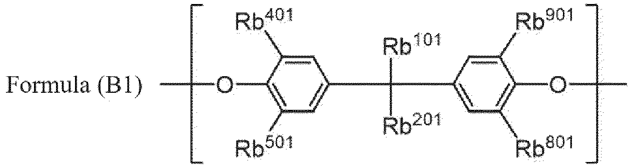
in Formula (A2), n²⁰¹ and n²⁰² are each independently an integer of 0 or more and 4 or less, and n²⁰¹ pieces of Ra²⁰¹'s and n²⁰² pieces of Ra²⁰²'s are each independently an alkyl group having 1 or more and 10 or less carbon atoms, an aryl group having 6 or more and 12 or less carbon atoms, or an alkoxy group having 1 or more and 6 or less carbon atoms,
in Formula (B 1), Rb¹⁰¹ is a branched alkyl group having 4 or more and 20 or less carbon atoms, Rb²⁰¹ is a hydrogen atom or an alkyl group having 1 or more and 3 or less carbon atoms, and Rb⁴⁰¹, Rb⁵⁰¹, Rb⁸⁰¹, and Rb⁹⁰¹ are each independently a hydrogen atom, an alkyl group having 1 or more and 4 or less carbon atoms, an alkoxy group having 1 or more and 6 or less carbon atoms, or a halogen atom.

8. The image forming apparatus according to claim 7,
wherein the polyester resin having the dicarboxylic acid unit represented by Formula (A2) and the diol unit represented by Formula (B1) is a polyester resin having a dicarboxylic acid unit represented by (A2-3) and a diol unit represented by (B1-4),

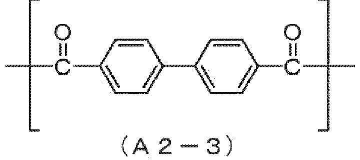

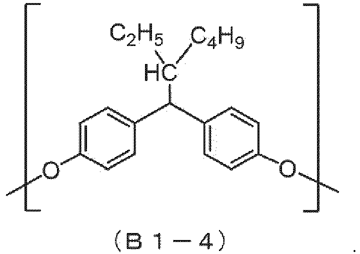

9. A process cartridge that is detachably mounted in an image forming apparatus, the process cartridge comprising:
an electrophotographic photoreceptor that has a photosensitive layer constituting a surface; and
a cleaning device that has a cleaning blade coming into contact with the surface of the electrophotographic photoreceptor and cleaning at least residual toner particles on the surface of the electrophotographic photoreceptor,
wherein the photosensitive layer in the electrophotographic photoreceptor contains a polyester resin (1) having a dicarboxylic acid unit (A) represented by Formula (A) and a diol unit (B) represented by Formula (B), and
a contact portion of the cleaning blade with the electrophotographic photoreceptor contains an impregnated cured layer of a composition that contains an isocyanate and at least one polymer selected from the group consisting of a fluorine-based polymer and a silicone-based polymer, 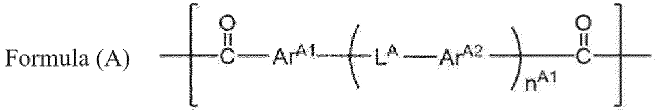 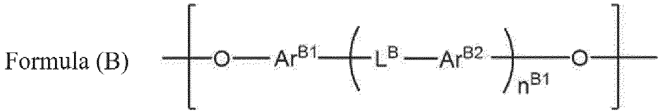
in Formula (A), Ar^{A1} and Ar^{A2} are each independently an aromatic ring that may have a substituent, L^{A} is a single bond or a divalent linking group, and n^{A1} is 0, 1, or 2,
in Formula (B), Ar^{B1} and Ar^{B2} are each independently an aromatic ring that may have a substituent, L^{B} is a single bond, an oxygen atom, a sulfur atom, or -C(Rb¹)(Rb²)-, and n^{B1} is 0, 1, or 2, where Rb¹ and Rb² are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and Rb¹ and Rb² may be bonded to each other to form a cyclic alkyl group.
